# EUROPEAN PATENT APPLICATION

(11) **EP 1 359 513 A1**
(43) Date of publication of application: **05.11.2003**
(21) Application number: 02711371.1
(22) Date of filing: 07.02.2002
(51) Int. Cl.: G06F 15/00

(54) **AUTHENTICATION METHOD, AUTHENTICATION SYSTEM, AUTHENTICATION DEVICE, AND MODULE FOR AUTHENTICATION**

(30) Priority: 09.02.2001 JP 2001034281
(71) Applicant: Sony Corporation, Tokyo 141-0001 (JP)
(72) Inventor: NODA, Masanori, c/o SONY CORPORATION, Tokyo 141-0001 (JP); IWAI, Ryosuke, c/o SONY CORPORATION, Tokyo 141-0001 (JP)
(74) Representative: Melzer, Wolfgang, Dipl.-Ing.
(86) International application number: JP0201020
(87) International publication number: WO02065311

(57) **Abstract**

An authentication method capable of authenticating a user using bio-information for a broad range of users having a variety of physical characteristics is provided. An authentication apparatus reads out a user ID from an authentication card 14, an authentication apparatus 15 reads out the designated type of bio-information among bio-information corresponding to the read out user ID from a storing means provided in the authentication apparatus 15, the authentication apparatus 15 detects the designated type of bio-information from the user, and the authentication apparatus 15 compares the read out bio-information with the detected bio-information and authenticates the legitimacy of the user based on the result of the comparison.

## Description

### TECHNICAL FIELD

The present invention relates to an authentication method, an authentication system, an authentication apparatus, and an authentication module for user authentication using bio-information.

### BACKGROUND ART

In transactions using bank ATMs and network transactions using personal computers, the legitimacy of the user is authenticated by using an authentication card provided with, for example an IC (integrated circuit) or magnetic strip.

In the authentication by such an authentication card, for example, the user loads the authentication card in the authentication apparatus of the ATM, personal computer, etc. and inputs a password. Then, the authentication apparatus compares the password read out from the authentication card with the password input by the user and authenticates that the user is the person in question if they coincide.

It is necessary to set a number of digits of the password used in the authentication which can be easily remembered by the user, so it usually consists of four digits.

In the conventional authentication method, however, since the password used for the authentication has about four digits, there is a problem in that the number of digits is not sufficient from the viewpoint of security.

In order to solve such a problem, in recent years, an authentication system for authenticating the person in question by using bio-information such as a fingerprint or voice of the user has been developed.

In such an authentication system, the user is authenticated by using one type of bio-information determined in advance.

However, according to some physical characteristics of the user, the bio-information cannot be suitably detected in some cases. Also, according to the type of the apparatus where the authentication apparatus is used, the type of detecting means for detecting the bio-information differs in some cases. If only one type of bio-information can be handled, there is a problem that the apparatuses which can employ the authentication system end up being limited.

### DISCLOSURE OF THE INVENTION

The present invention has been made in view of the problems of the above-mentioned prior art and has as an object thereof to provide an authentication method, an authentication system, an authentication apparatus, and an authentication module capable of authenticating a user using bio-information for a wide range of users having a variety of physical characteristics.

Another object of the present invention is to provide an authentication method, an authentication system, an authentication apparatus, and an authentication module making it possible to authenticate a user using a plurality of apparatuses provided with detecting means capable of detecting different bio-information.

An authentication method of a first aspect of the invention is an authentication method for authenticating a user by using an authentication module which is portable, wherein a controlling means reads out a designated type of bio-information from among a plurality of types of bio-information of the user stored in a storing means, a detecting means detects the designated type of bio-information from the user, and an authenticating means compares the bio-information read out from the storing means with the bio-information read out by the detecting means and authenticates the legitimacy of the user based on a result of the comparison.

According to the authentication method of the first aspect of the invention, a plurality of types of bio-information for users are prepared, and the authentication processing using the designated bio-information is carried out in accordance with request. For this reason, a user can be authenticated with a high reliability by using suitable bio-information in accordance with the physical characteristics of the user. Namely, the possibility of recognizing (authenticating) a person in question as not the person in question or recognizing that a user not the person in question is the person in question can be lowered.

Also, according to the authentication method of the first aspect of the invention, it becomes possible to perform the authentication using bio-information without providing a dedicated detecting means for authentication in accordance with the type of detecting means provided in the apparatus.

In the authentication method of the first aspect of the invention, preferably, the bio-information is at least one information of fingerprint information, voice information, handwriting information, face contour information, iris information, retinal information, palm information, earlobe information, and vein pattern information.

Note that in the authentication method of the first aspect of the invention, for example, it is also possible not to perform the authentication using the bio-information in response to an instruction.

An authentication apparatus of a second aspect of the invention is an authentication apparatus for authenticating a user by using an authentication module which is portable, and stores identification information for identifying the user or the authentication module, having a storing means for storing a plurality of types of bio-information of the user linked with the identification information, a reading means for reading the identification information from the authentication module, a detecting means for detecting the designated type of bio-information from the user, and an authenticating means for reading the designated type of bio-information among the bio-information corresponding to the identification information read out by the reading means from the storing means, comparing the read out bio-information with the bio-information detected by the detecting means, and authenticating the legitimacy of the user based on the result of the comparison.

The mode of operation of the authentication apparatus of the second aspect of the invention becomes as follows:

The identification information is read out from the authentication module by the reading means.

Also, the designated type of bio-information is detected from the user by the detecting means.

Next, by the authenticating means, the designated type of bio-information among the bio-information corresponding to the identification information read out by the reading means is read out from the storing means, the read out bio-information and the bio-information detected by the detecting means are compared, and the legitimacy of the user is authenticated based on the result of the comparison.

An authentication method of a third aspect of the invention is an authentication method for authenticating a user by using an authentication module which is portable and stores identification information for identifying the user or the authentication module, and an authentication apparatus, wherein the authentication apparatus reads out the identification information from the authentication module, reads out the designated type of bio-information among the bio-information corresponding to the read out identification information from the storing means provided in the authentication apparatus, detects the designated type of bio-information from the user, and compares the read out bio-information with the detected bio-information and authenticates the legitimacy of the user based on the result of the comparison.

The authentication method of the third aspect of the invention is a method corresponding to the authentication apparatus of the second aspect of the invention.

An authentication system of a fourth aspect of the invention is an authentication system having at least two authentication apparatuses including a first authentication apparatus and a second authentication apparatus for authenticating a user using an authentication module which is portable and stores identification information for identifying a user or the authentication module, wherein the first authentication apparatus has a first storing means for storing a first type of bio-information of the user linked with the identification information, a first reading means for reading the identification information from the authentication module, a first detecting means for detecting the first type of bio-information from the user, and a first authenticating means for comparing the bio-information corresponding to the identification information read out by the first reading means with the bio-information detected by the first detecting means and authenticating the legitimacy of the user based on the result of the comparison, and the second authentication apparatus has a second storing means for storing a second type of bio-information of the user linked with the identification information, a second reading means for reading out the identification information from the authentication module, a second detecting means for detecting the second type of bio-information from the user, and a second authenticating means for comparing the bio-information corresponding to the identification information read out by the second reading means with the bio-information detected by the second detecting means and authenticating the legitimacy of the user based on the result of the comparison.

The mode of operation of the authentication system of the fourth aspect of the invention becomes as follows.

When authenticating the user by using the first authentication apparatus, the identification information is read out from the authentication module by the first reading means.

Next, the first type of bio-information corresponding to the read out identification information is read out from the first storing means by the first authenticating means.

Also, the first type of bio-information is detected from the user by the first detecting means.

Next, the read out first type of bio-information and the first type of bio-information detected by the first detecting means are compared and the legitimacy of the user is authenticated based on the result of the comparison by the first authenticating means.

On the other hand, when authenticating the user by using the second authentication apparatus, the identification information is read out from the authentication module by the second reading means.

Next, the second type of bio-information corresponding to the read out identification information is read out from the second storing means by the second authenticating means.

Also, the second type of bio-information is detected from the user by the second detecting means.

Next, the read out second type of bio-information and the second type of bio-information detected by the second detecting means are compared and the legitimacy of the user is authenticated based on the result of the comparison by the second authenticating means.

An authentication method of a fifth aspect of the invention is an authentication method for authenticating a user by using an authentication module which is portable and stores identification information for identifying a user or the authentication module, and at least two authentication apparatuses including a first authentication apparatus and a second authentication apparatus for authenticating the user, wherein the first authentication apparatus reads out the identification information from the authentication module, the first authentication apparatus detects the first type of bio-information from the user, the first authentication apparatus reads out the first type of bio-information corresponding to the read out identification information from the first storing means provided in the first authentication apparatus, the first authentication apparatus compares the read out first type of bio-information with the detected first type of bio-information and authenticates the legitimacy of the user based on the result of the comparison, and the second authentication apparatus reads out the identification information from the authentication module, the second authentication apparatus detects the second type of bio-information from the user, reads out the second type of bio-information corresponding to the read out identification information from the second storing means provided in the second authentication apparatus, and the second authentication apparatus compares the read out second type of bio-information with the detected second type of bio-information and authenticates the legitimacy of the user based on the result of the comparison.

The authentication method of the fifth aspect of the invention is a method corresponding to the authentication system of the fourth aspect of the invention.

An authentication system of a sixth aspect of the invention is an authentication system having an authentication apparatus for authenticating a user by using an authentication module which is portable and stores identification information for identifying the user or the authentication module, and a server device for storing the bio-information of the user, wherein the server device stores a plurality of types of bio-information of the user linked with the identification information, and the authentication apparatus has a reading means for reading the identification information from the authentication module, a detecting means for detecting the type of bio-information used for authentication from the user, and an authenticating means for requesting the bio-information used for the authentication among the bio-information corresponding to the identification information read out by the reading means to the server device, receiving the bio-information from the server device in response to the request, comparing the bio-information received from the server device with the bio-information detected by the detecting means, and authenticating the legitimacy of the user based on the result of the comparison.

According to the authentication system of the sixth aspect of the invention, in the authentication system of the fourth aspect of the invention mentioned above, the first authentication apparatus and the second authentication apparatus receive bio-information of the user from the server device.

An authentication method of a seventh aspect of the invention is an authentication method for authenticating a user by using an authentication apparatus using an authentication module which is portable and stores the identification information for identifying the user or the authentication module, and a server device for storing the bio-information of the user, wherein the server device stores a plurality of types of bio-information of the user linked with the identification information, the authentication apparatus reads out the identification information from the authentication module, detects the type of the bio-information used for authentication from the user, requests the bio-information used for the authentication among the bio-information corresponding to the read out identification information to the server device, the server device transmits the bio-information used for the authentication to the authentication apparatus in. response to the request, and the authentication apparatus compares the bio-information received from the server device with the detected bio-information and authenticates the legitimacy of the user based on the result of the comparison.

The seventh aspect of the invention is an authentication method corresponding to the authentication system of the sixth aspect of the invention.

An authentication system of an eighth aspect of the invention is an authentication system having a first authentication module and a second authentication module which is portable can be used and carried by a user and a processing device for processing based on the result of the authentication of the user using the first authentication module and the second authentication module, wherein the first authentication module has a first storing means for storing first identification information for identifying the user or the first authentication module and a first authenticating means for comparing the first type of bio-information of the user detected by the processing device with the first type of bio-information corresponding to the first identification information stored in the first storing means, authenticating the legitimacy of the user based on the result of the comparison, and outputting the result of the authentication to the processing device, the second authentication module has a second storing means for storing second identification information for identifying the user or the second authentication module and a second authenticating means for comparing the second type of bio-information of the user detected by the processing device with the second type of bio-information corresponding to the second identification information stored in the second storing means, authenticating the legitimacy of the second user based on the result of the comparison, and outputting the result of the authentication to the processing device, the processing device has a storing means for storing the first type of bio-information of the user linked with the first identification information and storing the second type of bio-information of the user linked with the second identification information, a reading means for reading the first identification information and the second identification information from the first authentication module and the second authentication module, a first detecting means for detecting the first type of bio-information from the user, a second detecting means for detecting the second type of bio-information from the user, an outputting means for outputting the first type of bio-information of the user stored in the storing means and the bio-information detected at the first detecting means to the first authentication module and outputting the second type of bio-information of the user and the bio-information detected at the second detecting means to the second authentication module, and a processing means for processing based on results of the authentication input from the first authentication module and the second authentication module.

The mode of operation of the authentication system of the eighth aspect of the invention becomes as follows.

When the processing device authenticates the user by using the first authentication module, the reading means of the processing device reads out the first identification information for identifying the first authentication module or the user of the first authentication module from the first authentication module.

Next, in the processing device, the first type of bio-information corresponding to the read out first identification information is read out from the storing means.

Also, the first detecting means of the processing device detects the first type of bio-information from the user.

Next, the outputting means of the processing device outputs the read out first type of bio-information and the detected first type of bio-information to the first authentication module.

Next, the first authenticating means of the first authentication module compares the bio-information input from the processing device, authenticates the legitimacy of the user based on the result of the comparison, and outputs the result of the authentication to the processing device.

Next, the processing means of the processing device performs processing based on the result of the authentication input from the first authentication module.

On the other hand, when the processing device authenticates the user by using the second authentication module, the reading means of the processing device reads out the second identification information for identifying the second authentication module or the user of the second authentication module from the second authentication module.

Next, in the processing device, the second type of bio-information corresponding to the read out second identification information is read out from the storing means.

Also, the second detecting means of the processing device detects the second type of bio-information from the user.

Next, the outputting means of the processing device outputs the read out second type of bio-information and the detected second type of bio-information to the second authentication module.

Next, the second authenticating means of the second authentication module compares the bio-information input from the processing device, authenticates the legitimacy of the user based on the result of the comparison, and outputs the result of the authentication to the processing device.

Next, the processing means of the processing device performs the processing based on the result of the authentication input from the second authentication module.

An authentication method of a ninth aspect of the invention is an authentication method using a first authentication module and a second authentication module which can be used and carried by a user and a processing device for performing the processing based on the result of the authentication of the user using the first authentication module and the second authentication module, wherein, when the processing device authenticates the user by using the first authentication module, the processing device reads out from the first authentication module first identification information for identifying the first authentication module or the user of the first authentication module from the first authentication module, the processing device reads out the first type of bio-information corresponding to the read out first identification information from the storing means provided in the processing device, the processing device detects the first type of bio-information from the user, and outputs the read out first type of bio-information and the detected first type of bio-information to the first authentication module, the first authentication module compares the bio-information input from the processing device, authenticates the legitimacy of the user based on the result of the comparison, and outputs the result of the authentication to the processing device, and the processing device performs the processing based on the result of the authentication input from the first authentication module, while when the processing device authenticates the user by using the second authentication module, the processing device reads out from the second authentication module second identification information for identifying the second authentication module or the user of the second authentication module, reads out from the storing means provided therein the second type of bio-information corresponding to the read out second identification information, detects the second type of bio-information from the user, and outputs the read out second type of bio-information and the detected second type of bio-information to the second authentication module, the second authentication module compares the bio-information input from the processing device, authenticates the legitimacy of the user based on the result of the comparison, and outputs the result of the authentication to the processing device, and the processing device performs the processing based on the result of the authentication input from the second authentication module.

The authentication method of the ninth aspect of the invention is a method corresponding to the authentication system of the eighth aspect of the invention.

An authentication system of a 10th aspect of the invention is an authentication system having a first authentication module and a second authentication module which can be used and carried by a user, a server device for storing the bio-information of the user and having a processing device for performing the processing based on the result of the authentication of the user using the first authentication module and the second authentication module, wherein the first authentication module has a first storing means for storing first identification information for identifying the user or the first authentication module and a first authenticating means for comparing the first type of bio-information of the user detected by the processing device with the first type of bio-information input from the processing device, authenticating the legitimacy of the user based on the result of the comparison, and outputting the result of the authentication to the processing device, the second authentication module has a second storing means for storing second identification information for identifying the user or the second authentication module and a second authenticating means for comparing the second type of bio-information of the user detected by the processing device with the second type of bio-information input from the processing device, authenticating the legitimacy of the user based on the result of the comparison, and outputting the result of the authentication to the processing device, the server device stores the first type of bio-information of the user linked with the first identification information and stores the second type of bio-information of the user linked with the second identification information, and the processing device has a first reading means for reading the first identification information and the second identification information from the first authentication module and the second authentication module, a first detecting means for detecting the first type of bio-information from the user, a second detecting means for detecting the second type of bio-information from the user, an outputting means for outputting the first type of bio-information of the user received from the server device and the bio-information detected by the first detecting means to the first authentication module when the first authentication module is to be used, while outputting the second type of bio-information of the user received from the server device and the bio-information detected by the second detecting means to the second authentication module when the second authentication module is to be used, and a processing means for performing the processing based on the result of the authentication input from the first authentication module and the second authentication module.

According to the authentication system of the 10th aspect of the invention, in the authentication system of the eighth aspect of the invention, the first authentication module and the second authentication module receive the bio-information of the user from the server device via the processing device.

An authentication method of an 11th aspect of the invention is an authentication method using a first authentication module and a second authentication module which can be used and carried by a user, a processing device for performing the processing based on the result of the authentication of the user using the first authentication module and the second authentication module and using a server device, wherein when the processing device authenticates the user by using the first authentication module, the processing device reads out from the first authentication module first identification information for identifying the first authentication module or the user of the first authentication module, and requests the first type of bio-information corresponding to the first identification information to the server device, the server device transmits the first type of bio-information corresponding to the first identification information to the processing device in response to the request, the processing device detects the first type of bio-information from the user, outputs the first type of bio-information received from the server device and the detected first type of bio-information to the first authentication module, the first authentication module compares the bio-information input from the processing device, authenticates the legitimacy of the user based on the result of the comparison, and outputs the result of the authentication to the processing device, and the processing device performs the processing based on the result of the authentication input from the first authentication module, while when the first processing device authenticates the user by using the second authentication module, the processing device requests the second type of bio-information corresponding to the second identification information to the server device, the server device transmits the first type of bio-information corresponding to the second identification information to the processing device in response to the request, the processing device detects the second type of bio-information from the user, and outputs the second type of bio-information received from the server device and the detected second type of bio-information to the second authentication module, the second authentication module compares the bio-information input from the processing device, authenticates the legitimacy of the user based on the result of the comparison, and outputs the result of the authentication to the processing device, and the processing device performs the processing based on the result of the authentication input from the second authentication module.

The authentication method of the 11th aspect of the invention is a method corresponding to the 10th authentication system.

An authentication system of a 12th aspect of the invention is an authentication system having an authentication module which can be used and carried by a user and a plurality of processing devices including a first processing device and a second processing device for performing processing based on the result of authentication of the user using the authentication module, wherein the authentication module has a storing means for storing identification information for identifying the user or the authentication module and an authenticating means for comparing, when the authentication is carried out by using the first processing device, first type of bio-information of the user detected by the first processing device with the first type of bio-information corresponding to the identification information stored in the first processing device, authenticating the legitimacy of the user based on the result of the comparison, and outputting the result of the authentication to the first processing device, while comparing, when the authentication is carried out by using the second processing device, second type of bio-information of the user detected by the second processing device with the second type of bio-information corresponding to the identification information stored in the second processing device, authenticating the legitimacy of the user based on the result of the comparison, and outputting the result of the authentication to the second processing device, the first processing device has a first storing means for storing the first type of bio-information of the user linked with the identification information, a first reading means for reading the identification information from the authentication module, a first detecting means for detecting the first type of bio-information from the user, a first outputting means for outputting bio-information stored in the first storing means and corresponds to the identification information, and outputting the bio-information detected at the first detecting means to the authentication module, and a first processing means for performing the processing based on the result of the authentication input from the authentication module, and the second processing device has a second storing means for storing the second type of bio-information of the user linked with the identification information, a second reading means for reading the identification information from the authentication module, a second detecting means for detecting the second type of bio-information from the user, a second outputting means for outputting bio-information stored in the second storing means and corresponds to the identification information, and outputting the bio-information detected at the second detecting means to the authentication module, and a second processing means for performing the processing based on the result of the authentication input from the authentication module.

The mode of operation of the authentication system of the 12th aspect of the invention becomes as follows.

In the authentication system, when the authentication is carried out by using the authentication module and the first processing device, the first reading means of the first processing device reads out the identification information for identifying the user or the authentication module from the storing means of the authentication module.

Next, the first outputting means of the first processing device reads out the first type of bio-information corresponding to the read out identification. information from the first storing means provided in the first processing device.

Next, the first detecting means of the first processing device detects the first type of bio-information from the user.

Next, the first outputting means of the first processing device outputs the read out first type of bio-information and the detected first type of bio-information to the authentication module.

Next, the authenticating means of the authentication module compares the bio-information input from the first processing device, authenticates the legitimacy of the user based on the result of the comparison, and outputs the result of the authentication to the first processing device.

Next, the first processing means of the first processing device performs the processing based on the result of the authentication input from the authentication module.

On the other hand, in the authentication system, when the authentication is carried out by using the authentication module and the second processing device, the second reading means of the second processing device reads out the identification information for identifying the user or the authentication module from the storing means of the authentication module.

Next, the second outputting means of the second processing device reads out the second type of bio-information corresponding to the read out identification information from the second storing means provided in the second processing device.

Next, the second detecting means of the second processing device detects the second type of bio-information from the user.

Next, the second outputting means of the second processing device outputs the read out second type of bio-information and the detected second type of bio-information to the authentication module.

Next, the authenticating means of the authentication module compares the bio-information input from the second processing device, authenticates the legitimacy of the user based on the result of the comparison, and outputs the result of the authentication to the second processing device.

Next, the second processing means of the second processing device performs the processing based on the result of the authentication input from the authentication module.

An authentication method of a 13th aspect of the invention is an authentication method having an authentication module which can be used and carried by a user and a plurality of processing devices including a first processing device and a second processing device for performing processing based on the result of authentication of the user using the authentication module, wherein, when carrying out the authentication by using the authentication module and the first processing apparatus, the first processing device reads out identification information for identifying the user or the authentication module from the authentication module, reads out a first type of bio-information corresponding to the read out identification information from a first storing means provided in the first processing device, detects the first type of bio-information from the user, and outputs the read out first type of bio-information and the detected first type of bio-information to the authentication module, the authentication module compares the bio-information input from the first processing device, authenticates the legitimacy of the user based on the result of the comparison, and outputs the result of the authentication to the first processing device, and the first processing device performs the processing based on the result of the authentication input from the authentication module, while when carrying out the authentication by using the authentication module and the second processing device, the second processing device reads out identification information for identifying the user or the authentication module from the authentication module, reads out a second type of bio-information corresponding to the read out identification information from a second storing means provided in the second processing device, detects the second type of bio-information from the user, and outputs the read out second type of bio-information and the detected second type of bio-information to the authentication module, the authentication module compares the bio-information input from the second processing device, authenticates the legitimacy of the user based on the result of the comparison, and outputs the result of the authentication to the second processing device, and the second processing device performs the processing based on the result of the authentication input from the authentication module.

An authentication system of a 14th aspect of the invention is an authentication system having an authentication module which can be used and carried by a user, a server device for storing bio-information of the user, and a plurality of processing devices including a first processing device and a second processing device for performing processing based on the result of authentication of the user using the authentication module, wherein the authentication module has a storing means for storing identification information for identifying the user or the authentication module and an authenticating means for comparing, when the authentication is carried out by using the first processing device, a first type of bio-information of the user detected by the first processing device with the bio-information input from the first processing device, that is, the first type of bio-information corresponding to the identification information, authenticating the legitimacy of the user based on the result of the comparison, outputting the result of the authentication to the first processing device, while comparing, when the authentication is carried out by using the second processing device, a second type of bio-information of the user detected by the second processing device with the bio-information input from the second processing device, that is, the second type of bio-information corresponding to the identification information, authenticating the legitimacy of the user based on the result of the comparison, and outputting the result of the authentication to the second processing device, the server device stores the first type of bio-information of the user linked with the first identification information and stores the second type of bio-information of the user linked with the second identification information, the first processing device has a first reading means for reading the identification information from the authentication module, a first detecting means for detecting the first type of bio-information from the user, a first outputting means for receiving the first type of bio-information of the user from the server device and outputting the bio-information received from the server device and the bio-information detected at the first detecting means to the authentication module, and a first processing means for performing the processing based on the result of the authentication input from the authentication module, and the second processing device has a second reading means for reading the identification information from the authentication module, a second detecting means for detecting the second type of bio-information from the user, a second outputting means for receiving the second type of bio-information of the user from the server device and outputting the bio-information received from the server device and the bio-information detected at the second detecting means to the authentication module, and a second processing means for performing the processing based on the result of the authentication input from the authentication module.

According to the authentication system of the 14th aspect of the invention, in the authentication system of the 12th aspect of the invention, the authentication module receives the bio-information of the user from the server device via the first processing device or the second processing device.

An authentication method of a 15th aspect of the invention is an authentication method for authenticating a user by using an authentication module which can be used and carried by the user, a plurality of processing devices including a first processing device and second processing device for performing processing based on the result of the authentication of the user using the authentication module and a server device for storing the bio-information of the user, wherein when carrying out the authentication by using the authentication module and the first processing device, the first processing device reads out the identification information for identifying the user or the authentication module from the authentication module, and requests the first type of bio-information corresponding to the read out identification information to the server device, the server device transmits a first type of bio-information corresponding to the identification information to the first processing device, the first processing device detects the first type of bio-information from the user, and outputs the first type of bio-information received from the server device and the detected first type of bio-information to the authentication module, the authentication module compares the bio-information input from the first processing device, authenticates the legitimacy of the user based on the result of the comparison, and outputs the result of the authentication to the first processing device, and the first processing device performs the processing based on the result of the authentication input from the authentication module, while, when carrying out the authentication by using the authentication module and the second processing device, the second processing device reads out the identification information for identifying the user or the authentication module from the authentication module, and requests a second type of bio-information corresponding to the read out identification information to the server device, the server device transmits the second type of bio-information corresponding to the identification information to the second processing device, the second processing device detects the second type of bio-information from the user, the second processing device outputs the second type of bio-information received from the server device and the detected second type of bio-information to the authentication module, the authentication module compares the bio-information input from the second processing device, authenticates the legitimacy of the user based on the result of the comparison, and outputs the result of the authentication to the second processing device, and the second processing device performs the processing based on the result of the authentication input from the authentication module.

An authentication apparatus of a 16th aspect of the invention is an authentication apparatus for authenticating a user by using an authentication module which is portable and stores a plurality of bio-information of the user therein, having a detecting means for detecting bio-information corresponding to at least one type of the plurality of types from the user, a reading means for reading the bio-information corresponding to the type of the bio-information detected by the detecting means from the authentication module, and an authenticating means for comparing the bio-information detected by the detecting means and the bio-information read out by the reading means and authenticating the legitimacy of the user based on the result of the comparison.

The mode of operation of the authentication apparatus of the 16th aspect of the invention becomes as follows.

The bio-information corresponding to at least one type of the plurality of types is detected from the user by the detecting means.

Also, the bio-information corresponding to the detected type of bio-information is read out from the authentication module by the reading means.

Next, the authenticating means compares the detected bio-information and the read out bio-information, and the legitimacy of the user is authenticated based on the result of the comparison.

The authentication apparatus of the 16th aspect of the invention preferably further has a decoding means for decoding the read out bio-information by using predetermined decoding key information when encrypted bio-information is stored in the authentication module.

An authentication system of a 17th aspect of the invention is an authentication system having an authentication module which is portable and having an authentication apparatus for authenticating the user by using the authentication module, wherein the authentication module stores a plurality of types of bio-information, and the authentication apparatus has a detecting means for detecting the bio-information corresponding to at least one type of the plurality of types from the user, a reading means for reading the bio-information corresponding to the type of the bio-information detected by the detecting means from the authentication module, and an authenticating means for comparing the bio-information detected by the detecting means with the bio-information read out by the reading means and authenticating the legitimacy of the user based on the result of the comparison.

The authentication system of the 17th aspect of the invention is an authentication system provided with the authentication apparatus of the 16th aspect of the invention.

An authentication method of an 18th aspect of the invention is an authentication method for authenticating a user by using an authentication module which is portable and stores a plurality of types of bio-information of the user therein, comprising the steps of detecting the bio-information corresponding to at least one type of the plurality of types from the user, reading the bio-information corresponding to the detected type of bio-information from the authentication module, comparing the detected bio-information with the read out bio-information, and authenticating the legitimacy of the user based on the result of the comparison.

An authentication system of a 19th aspect of the invention is an authentication system having an authentication module which is portable and a processing device, wherein the authentication module has a storing means for storing a plurality of types of bio-information, an inputting means for inputting the bio-information of the user from the processing device, and an authenticating means for reading the bio-information of the same type as the bio-information input by the inputting means from the storing mean, comparing the read out bio-information with the bio-information input from the inputting means, and authenticating the legitimacy of the user based on the result of the comparison, and the processing device has a detecting means for detecting the bio-information from the user and an outputting means for outputting the detected bio-information to the authentication module.

The mode of operation of the authentication system of the 19th aspect of the invention becomes as follows.

In the authentication method for authenticating a user by using an authentication module which is portable and a processing device, the detecting means of the processing device detects the bio-information of the user.

Next, the outputting means of the processing device outputs the detected bio-information to the authentication module.

Next, the authenticating means of the authentication module reads out the bio-information of the same type as the bio-information input from the processing device from the storing means provided in the authentication module.

Next, the authenticating means of the authentication module compares the read out bio-information with the bio-information input from the processing device and authenticates the legitimacy of the user based on the result of the comparison.

The authentication system of the 19th aspect of the invention preferably further has a decoding means for decoding the read out bio-information by using the predetermined decoding key information when encrypted bio-information is stored in the storing means.

An authentication module of a 20th aspect of the invention is an authentication module which is portable and authenticates the user by inputting and outputting bio-information with the processing device, having a storing means for storing a plurality of types of bio-information, an inputting means for inputting the bio-information of the user from the processing device, and an authenticating means for reading the same type of bio-information as the bio-information input by the inputting means from the storing means, comparing the read out bio-information with the bio-information input from the inputting means, and authenticating the legitimacy of the user based on the result of the comparison.

An authentication method of a 21st aspect of the invention is an authentication method for authenticating a user by using an authentication module which is portable and a processing device, wherein the processing device detects the bio-information of the user, and outputs the detected bio-information to the authentication module, the authentication module reads out the same type of bio-information as the bio-information input from the processing device from the storing means provided in the authentication module, and the authentication module compares the read out bio-information with the bio-information input from the processing device, and authenticates the legitimacy of the user based on the result of the comparison.

The authentication method of the 21st aspect of the invention is a method corresponding to the authentication system of the 20th aspect of the invention.

Note that, in the first to 21st aspects of the invention, for example, it is also possible not to perform the authentication using the corresponding bio-information in response to an instruction.

### BRIEF DESCRIPTION OF THE DRAWINGS

FIG. 1 is a flow chart for explaining authentication processing of a first embodiment of the present invention.
FIG. 2 is a flow chart for explaining another authentication processing of the first embodiment of the present invention.
FIG. 3 is an overall view illustrating the configuration of an authentication system of a second embodiment of the present invention.
FIG. 4 is a view for explaining an authentication card shown in FIG. 3.
FIG. 5 is a functional block diagram illustrating an authentication apparatus shown in FIG. 3.
FIG. 6 is a view for explaining information stored in a storage unit shown in FIG. 3.
FIG. 7 is a flow chart for explaining an example of the operation of the authentication system shown in FIG. 3.
FIG. 8 is a flow chart for explaining another example of the operation of the authentication system shown in FIG. 3.
FIG. 9 is an overall view illustrating the configuration of the authentication system of a third embodiment of the present invention.
FIG. 10 is a functional block diagram illustrating an authentication apparatus 15a shown in FIG. 9.
FIG. 11 is a functional block diagram illustrating an authentication apparatus 15b shown in FIG. 9.
FIG. 12 is a flow chart for explaining an example of the operation of the authentication system shown in FIG. 9.
FIG. 13 is a flow chart for explaining another example of the operation of the authentication system shown in FIG. 9.
FIG. 14 is an overall view illustrating the configuration of the authentication system of a fourth embodiment of the present invention.
FIG. 15 is a functional block diagram illustrating an authentication apparatus 115a shown in FIG. 14.
FIG. 16 is a functional block diagram of the authentication apparatus 115b shown in FIG. 14.
FIG. 17 is a flow chart for explaining an example of the operation of the authentication system shown in FIG. 14.
FIG. 18 is a flow chart for explaining another example of the operation of the authentication system shown in FIG. 14.
FIG. 19 is an overall view illustrating the configuration of the authentication system of a fifth embodiment of the present invention.
FIG. 20 is a view for explaining an authentication card 214a shown in FIG. 19.
FIG. 21 is a view for explaining an authentication card 214b shown in FIG. 19.
FIG. 22 is a functional block diagram illustrating the processing device shown in FIG. 19.
FIG. 23 is a view for explaining the information stored in a storage unit shown in FIG. 22.
FIG. 24 is a flow chart for explaining an example of the operation of the authentication system shown in FIG. 19.
FIG. 25 is a flow chart for explaining another example of the operation of the authentication system shown in FIG. 19.
FIG. 26 is an overall view illustrating the configuration of the authentication system of a sixth embodiment of the present invention.
FIG. 27 is a functional block diagram illustrating the processing device shown in FIG. 26.
FIG. 28 is a flow chart for explaining an example of the operation of the authentication system shown in FIG. 26.
FIG. 29 is a flow chart for explaining another example of the operation of the authentication system shown in FIG. 26.
FIG. 30 is an overall view illustrating the configuration of the authentication system of a seventh embodiment of the present invention.
FIG. 31 is a view for explaining the authentication card shown in FIG. 30.
FIG. 32 is a functional block diagram illustrating a processing device 415a shown in FIG. 30.
FIG. 33 is a functional block diagram illustrating a processing device 415b shown in FIG. 30.
FIG. 34 is a flow chart for explaining an example of the operation of the authentication system shown in FIG. 30.
FIG. 35 is a flow chart for explaining another example of the operation of the authentication system shown in FIG. 30.
FIG. 36 is an overall view illustrating the configuration of the authentication system of an eighth embodiment of the present invention.
FIG. 37 is a functional block diagram illustrating a processing device 515a shown in FIG. 36.
FIG. 38 is a functional block diagram illustrating a processing device 515b shown in FIG. 36.
FIG. 39 is a flow chart for explaining an example of the operation of the authentication system shown in FIG. 36.
FIG. 40 is a flow chart for explaining another example of the operation of the authentication system shown in FIG. 36.
FIG. 41 is an overall view illustrating the configuration of the authentication system of a ninth embodiment of the present invention.
FIG. 42 is a view for explaining the authentication card shown in FIG. 41.
FIG. 43 is a view for explaining the information stored in the storage unit shown in FIG. 42.
FIG. 44 is a functional block diagram illustrating an authentication apparatus 615a shown in FIG. 41.
FIG. 45 is a functional block diagram illustrating an authentication apparatus 615b shown in FIG. 41.
FIG. 46 is a flow chart for explaining an example of the operation of the authentication system shown in FIG. 41.
FIG. 47 is a flow chart for explaining another example of the operation of the authentication system shown in FIG. 41.
FIG. 48 is an overall view illustrating the configuration of the authentication system of a 10th embodiment of the present invention.
FIG. 49 is a view for explaining the authentication card shown in FIG. 48.
FIG. 50 is a view for explaining the information stored in the storage unit shown in FIG. 49
FIG. 51 is a functional block diagram illustrating a processing device 715a shown in FIG. 48.
FIG. 52 is a functional block diagram illustrating a processing device 715b shown in FIG. 48.
FIG. 53 is a flow chart for explaining an example of the operation of the authentication system shown in FIG. 48.
FIG. 54 is a flow chart for explaining another example of the operation of the authentication system shown in FIG. 48.

### BEST MODE FOR CARRYING OUT THE INVENTION

Hereinafter, an explanation will be made of embodiments of the present invention with reference to the attached drawings.

In the following embodiments, a case where for example an authentication card is used as the module which can be carried by a user is exemplified. In the present embodiment, information is input and output by a contact method or a non-contact method between the authentication card and an authentication apparatus or other apparatus, and authentication is carried out using the bio-information of the user.

In the following embodiments, an authentication card is illustrated as the module of the present invention, but other than this, as the module of the present invention,use may also be made of a memory stick, smart card, or other portable storage device.

Also, in the embodiments, a case where for example fingerprint information and voice information of the user are used as the bio-information is illustrated, but other than this, it is also possible to use handwriting information, face contour information, iris information, retinal information, palm information, ear lobe information, and the vein pattern information as the bio-information.

### First Embodiment

In the present embodiment, an explanation will be made of the steps of authentication processing forming the basis of the present invention.

In the present embodiment, the detecting means is provided with, for example, an authentication apparatus or other apparatus. Also, the controlling means, storing means, and authenticating means can be provided in any of the authentication card and apparatus too.

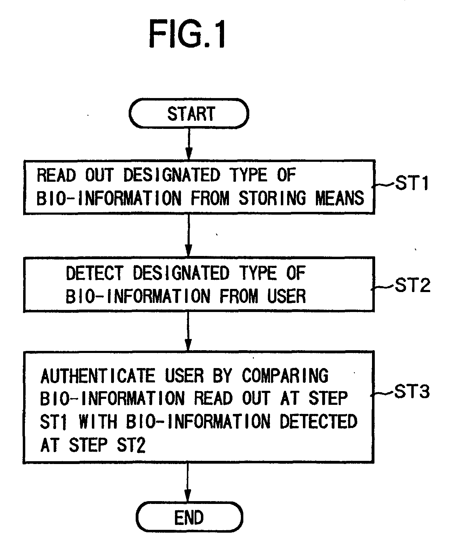

FIG. 1 is a flow chart for explaining the authentication processing of the present embodiment.

### Step ST1:

The designated type of bio-information among a plurality of types of bio-information of the user stored in the storing means is read out from the storing means by the controlling means.

### Step ST2:

The designated type of bio-information is detected from the user by the detecting means.

### Step ST3:

By the authenticating means, the bio-information read out from the storing means and the bio-information read out by the detecting means are compared, and the legitimacy of the user is authenticated based on the result of the comparison.

As explained above, according to the authentication method of the present embodiment, a plurality of types of bio-information for each user are prepared, and the authentication processing using the designated bio-information is carried out in response to request.

For this reason, according to the authentication method of the present embodiment, a user can be authenticated with a high reliability by using suitable bio-information in accordance with the physical characteristics of the user. Namely, the possibility that a person in question is not recognized (authenticated) as the person in question or a user not the person in question is recognized as the person in question can be lowered.

Also, according to the authentication method of the present embodiment, in accordance with the type of the detecting means provided in the apparatus, it becomes possible to perform the authentication using bio-information without providing a dedicated detecting means for authentication. For example, a microphone is provided in a mobile phone or the like, therefore when authentication is carried out by using the mobile phone, the voice information of the user is designated as the bio-information, while when the authentication is carried out by using a computer provided with a mouse pad, the handwriting information is designated as the bio-information.

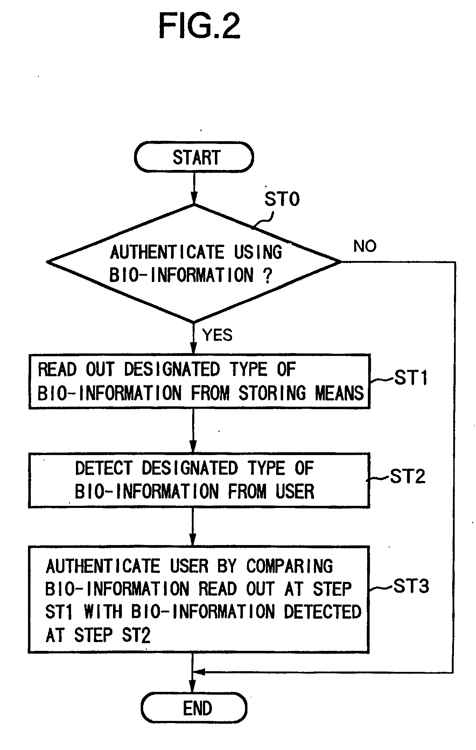

Note that, in the present embodiment, for example, as shown in FIG. 2, it is also possible if processing for deciding whether or not the bio-information is to be authenticated is carried out (ST0). When it is decided that the bio-information is to be authenticated, the processing of steps ST1 to ST3 shown in FIG. 1 is carried out, while when it is decided that the bio-information is not to be authenticated, the processing is terminated.

### Second Embodiment

The present embodiment is an embodiment corresponding to the second and third aspects of the invention.

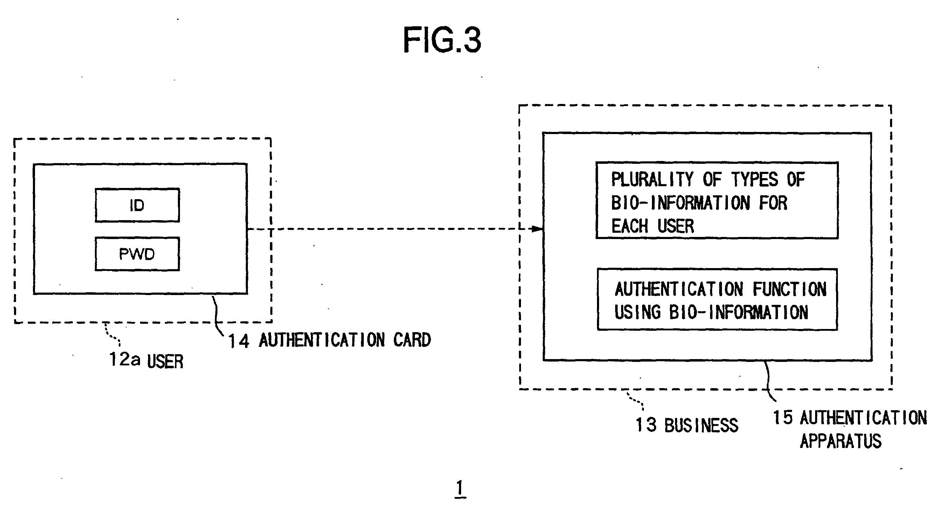

FIG. 3 is an overall view illustrating the configuration of an authentication system 1 of the present embodiment.

As shown in FIG. 3, in the authentication system 1, the user 12a is authenticated by using an authentication card 14 used by the user 12a and an authentication apparatus 15 used by a business 13.

The authentication card 14 corresponds to the authentication module of the present invention, while the authentication apparatus 15 corresponds to the authentication apparatus of the present invention.

Below, an explanation will be made of the authentication card 14 and the authentication apparatus 15.

### [Authentication Card 14]

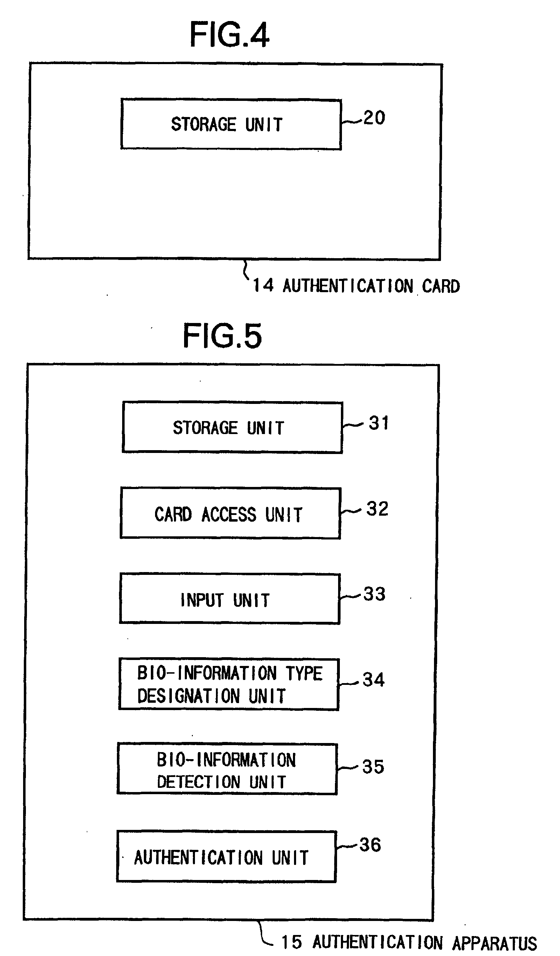

FIG. 4 is a view for explaining the authentication card 14 shown in FIG. 3.

As shown in FIG. 4, the authentication card 14 has a storage unit 20, for example, a magnetic strip or IC (integrated circuit).

The storage unit 20 has a user identification information ID (identification information of the present invention) allocated to the user 12a at the time of issuance of the authentication card 14 and a password PWD determined by the user 12a stored therein.

### [Authentication Apparatus 15]

The authentication apparatus 15 is built in for example an ATM of a bank or a personal computer.

FIG. 5 is a functional block diagram illustrating the authentication apparatus 15 shown in FIG. 3.

As shown in FIG. 5, the authentication apparatus 15 has, for example, a storage unit 31, a card access unit 32, an input unit 33, a bio-information type designation unit 34, a bio-information detection unit 35, and an authentication unit 36.

The storage unit 31 corresponds to the storing means of the present invention, the card access unit 32 corresponds to the reading means of the present invention, the bio-information type designation unit 34 corresponds to the designating means of the present invention, the bio-information detection unit 35 corresponds to the detecting means of the present invention, and the authentication unit 36 corresponds to the authenticating means of the present invention.

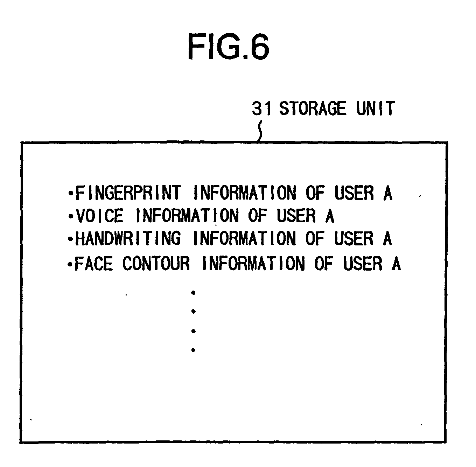

The storage unit 31 is, for example, a hard disk drive or a semiconductor memory and, as shown in FIG. 6, stores two or more bio-information among bio-information such as the fingerprint information, voice information, handwriting information, and face contour information for each of the registered users including the user 12a.

The card access unit 32 reads out the user identification information ID from the storage unit 20 of the authentication card 14 by the contact method or non-contact method.

The input unit 33 is for example a keyboard or a touch panel used by the user 12a for inputting the password PWD.

The user 12a or the business 13 uses the bio-information type designation unit 34 to designate the type of the bio-information to be used for authentication among the plurality of types of bio-information.

The bio-information detection unit 35 detects the bio-information of the user 12a. The bio-information detection unit 35 performs the detection, for example, fingerprint detection, voice detection, handwriting detection, or face contour detection of the user 12a.

The authentication unit 36 reads out the type of the bio-information designated at the bio-information type designation unit 34 among the bio-information corresponding to the user identification information ID read out from the authentication card 14 by the card access unit 32, compares the read out bio-information with the bio-information detected by the bio-information detection unit 35, and authenticates the legitimacy of the user 12a based on the result of the comparison.

The authentication processing by the authentication unit 36 is carried out in response to for example the type of the bio-information, for instance, processing for verification of the fingerprint information is performed when authentication using the fingerprint information is to be carried out, processing for verification of the voice information is performed when authentication using the voice information is to be carried out, processing for verification of the handwriting information is performed when authentication using the handwriting information is to be carried out, and processing for verification of the face contour information is performed when authentication using the face contour information is to be carried out.

Below, an explanation will be made of an example of the operation of the authentication system 1.

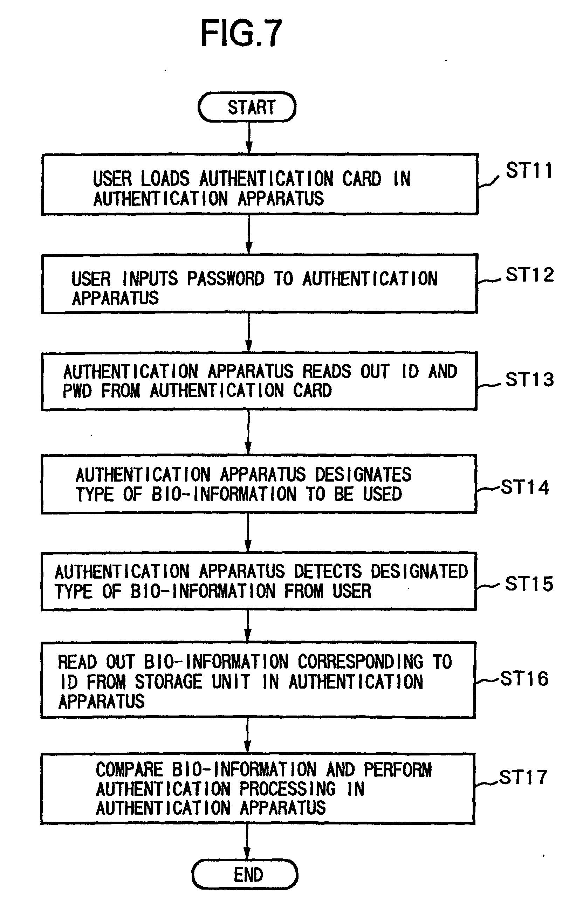

FIG. 7 is a flow chart for explaining an example of the operation of the authentication system 1 shown in FIG. 3.

### Step ST11:

The user 12a places the authentication card 14 at a location where it can be read out by the card access unit 32 of the authentication apparatus 15.

### Step ST12:

The user 12a operates the input unit 33 of the authentication apparatus 15 to input the password PWD.

### Step ST13:

By the card access unit 32 of the authentication apparatus 15, the user identification information ID and the password PWD are read out from the storage unit 20 of the authentication card 14 and stored in the storage unit 31. Then, the read out password PWD and the password PWD input at step ST12 are compared. When they coincide, the following processing is carried out.

### Step ST14:

The user 12a or the business 13 designates the type of the bio-information to be used for authentication by using the bio-information type designation unit 34 of the authentication apparatus 15.

The processing of step ST14 can be carried out before for example step ST13 too.

### Step ST15:

The bio-information detection unit 35 of the authentication apparatus 15 detects the bio-information designated at step ST14 from the user 12a. For example, when fingerprint information is designated at step ST14, the bio-information detection unit 35 detects the fingerprint of the user 12a by using for example a mouse pad. Also, when voice information is designated at step ST14, the bio-information detection unit 35 detects the voice information of the user 12a by using a microphone or the like.

### Step ST16:

The authentication unit 36 of the authentication apparatus 15 reads out the bio-information designated at step ST4 among the bio-information of the user 12a stored in the storage unit 31.

### Step ST17:

The authentication unit 36 compares the bio-information read out at step ST16 and the bio-information detected by the bio-information detection unit 35 at step ST15 and authenticates the legitimacy of the user 12a based on the result of the comparison.

As explained above, according to the authentication system 1, the authentication apparatus 15 can authenticate the user 12a by using the designated type of bio-information among a plurality of types of bio-information.

For this reason, according to the authentication system 1, the user can be authenticated by a high reliability by using suitable bio-information in response to the physical characteristics of the user 12a. Namely, the possibility that the person in question is not recognized (authenticated) as the person in question or a user not the person in question is recognized as the person in question can be lowered.

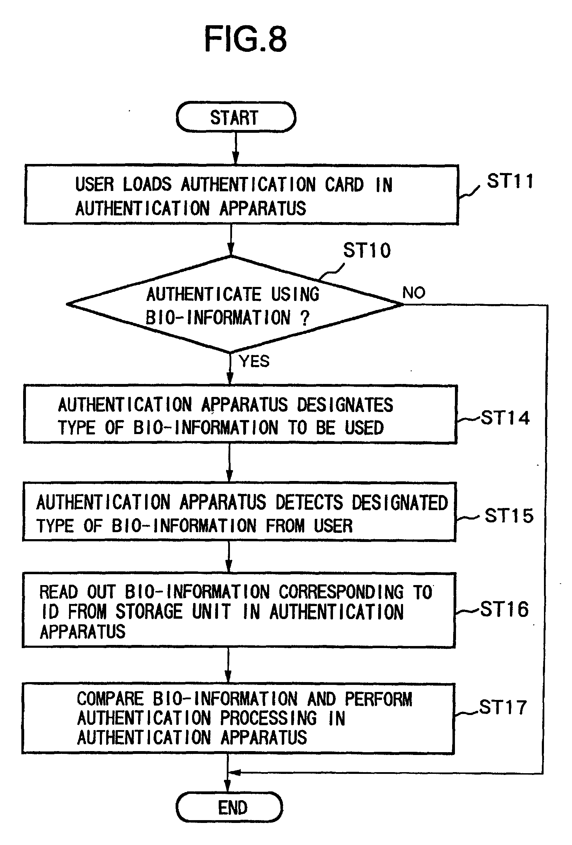

Note that, in the present embodiment, for example, as shown in FIG. 8, after the processing of step ST11 explained in FIG. 7 is terminated, it is also possible if processing for deciding whether or not the bio-information is to be authenticated is to be carried out by the authentication apparatus (ST10). When it is decided that the bio-information is to be authenticated, the processing of steps ST14 to ST17 shown in FIG. 7 is carried out, while when it is decided that the bio-information is not to be authenticated, the processing is terminated.

### Third Embodiment

The present embodiment is an embodiment corresponding to the fourth and fifth aspects of the invention.

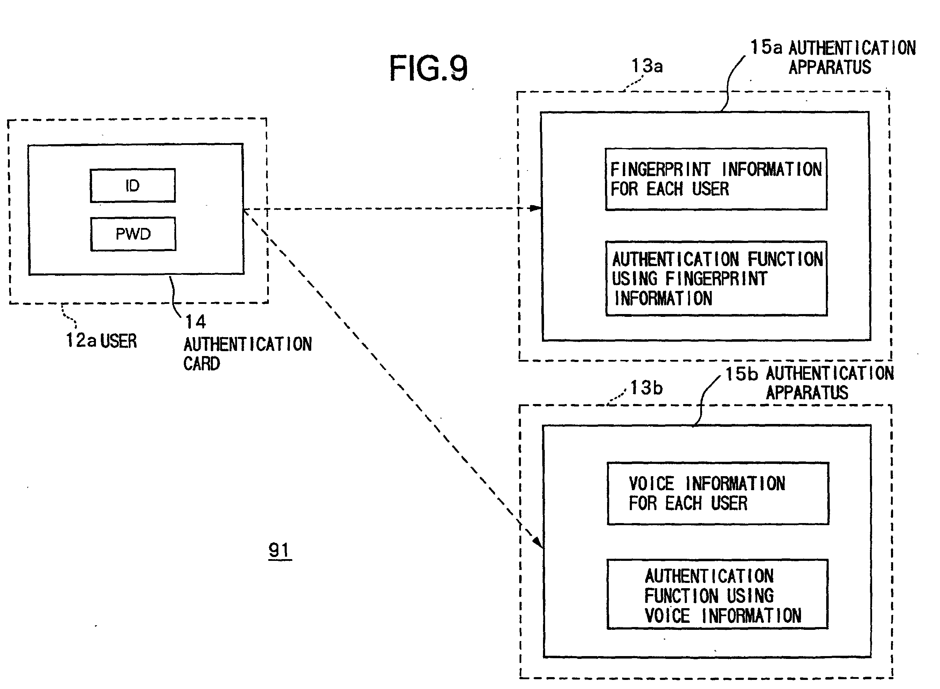

FIG. 9 is an overall view illustrating the configuration of an authentication system 91 of the present embodiment.

As shown in FIG. 9, in the authentication system 91, the user 12a is authenticated by using the authentication card 14 used by the user 12a, an authentication apparatus 15a used by a business 13a, and a authentication apparatus 15b used by a business 13b.

The authentication card 14 is the same as that explained by using FIG. 3 in the first embodiment.

The authentication card 14 corresponds to the authentication module of the present invention, the authentication apparatus 15a corresponds to the first authentication apparatus of the present invention, and the authentication apparatus 15b corresponds to the second authentication apparatus of the present invention.

### [Authentication Apparatus 15a]

The authentication apparatus 15a is built in for example the ATM of a bank or a personal computer.

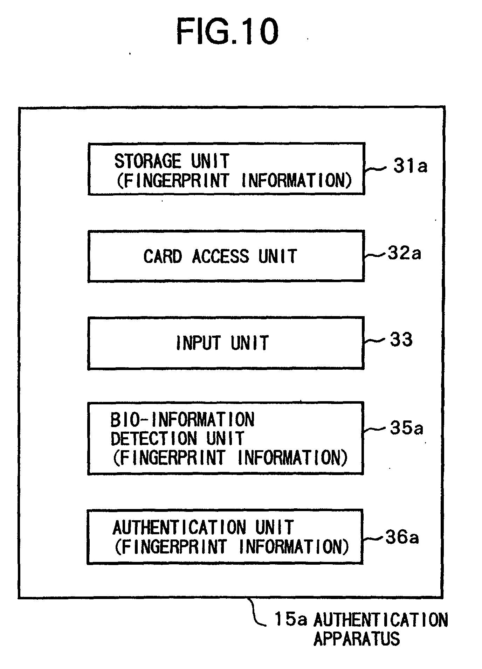

FIG. 10 is a functional block diagram illustrating the authentication apparatus 15a shown in FIG. 9.

As shown in FIG. 10, the authentication apparatus 15a has for example a storage unit 31a, a card access unit 32a, the input unit 33, a bio-information detection unit 35a, and an authentication unit 36a.

Here, the input unit 33 is the same as that explained by using FIG. 5 in the second embodiment.

Also, the storage unit 31a corresponds to the first storing means of the present invention, the card access unit 32a corresponds to the first reading means of the present invention, the bio-information detection unit 35a corresponds to the first detecting means of the present invention, and the authentication unit 36a corresponds to the first authenticating means of the present invention.

The storage unit 31a is for example a hard disk drive or semiconductor memory and stores the fingerprint information for each of the registered users including the user 12a.

The card access unit 32a reads out the user identification information ID from the storage unit 20 of the authentication card 14 by the contact method or non-contact method.

The bio-information detection unit 35a detects the fingerprint information of the user 12a.

The authentication unit 36a compares the fingerprint information corresponding to the user identification information ID read out from the authentication card 14 by the card access unit 32a and the fingerprint information detected by the bio-information detection unit 35a and authenticates the legitimacy of the user 12a based on the result of the comparison.

### [Authentication Apparatus 15b]

The authentication apparatus 15b is built in for example the ATM of a bank or a personal computer.

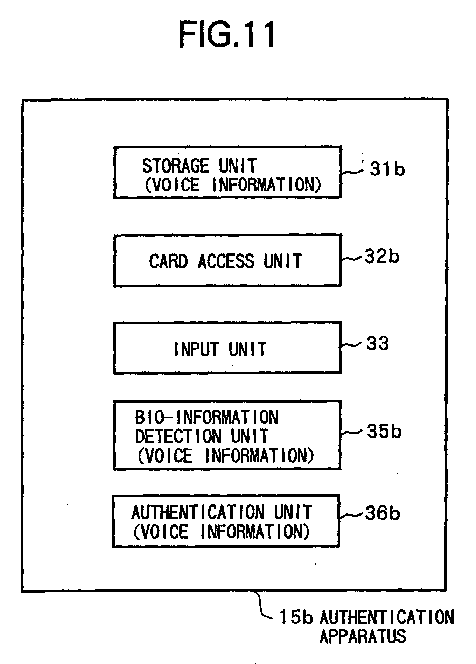

FIG. 11 is a functional block diagram illustrating the authentication apparatus 15b shown in FIG. 9.

As shown in FIG. 11, the authentication apparatus 15b has for example a storage unit 31b, a card access unit 32b, the input unit 33, a bio-information detection unit 35b, and an authentication unit 36b.

Here, the input unit 33 is the same as that explained by using FIG. 5 in the second embodiment.

Also, the storage unit 31b corresponds to the second storing means of the present invention, the card access unit 32b corresponds to the second reading means of the present invention, the bio-information detection unit 35b corresponds to the second detecting means of the present invention, and the authentication unit 36b corresponds to the second authenticating means of the present invention.

The storage unit 31b is for example a hard disk drive or semiconductor memory and stores the voice information for each of the registered users including the user 12a.

The card access unit 32b reads out the user identification information ID from the storage unit 20 of the authentication card 14 by the contact method or non-contact method.

The bio-information detection unit 35b detects the voice information of the user 12a.

The authentication unit 36b compares the voice information corresponding to the user identification information ID read out from the authentication card 14 by the card access unit 32b and the voice information detected by the bio-information detection unit 35b and authenticates the legitimacy of the user 12a based on the result of the comparison.

Below, an explanation will be made of an example of the operation of the authentication system 91.

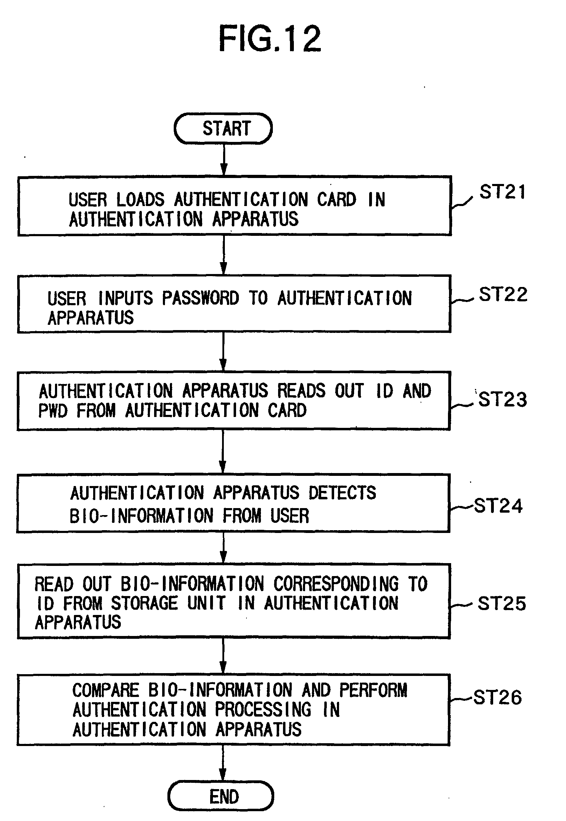

FIG. 12 is a flow chart for explaining the example of the operation of the authentication system 91 shown in FIG. 9.

Below, an explanation will be made of a case where the user 12a authenticates itself by using the authentication apparatus 15a.

### Step ST21:

The user 12a places the authentication card 14 at a position where it can be read out by the card access unit 32a of the authentication apparatus 15a.

### Step ST22:

The user 12a operates the input unit 33 of the authentication apparatus 15a to input the password PWD.

### Step ST23:

The card access unit 32a of the authentication apparatus 15a reads out the user identification information ID and the password PWD from the storage unit 20 of the authentication card 14 and stores them in the storage unit 31a. Then, the read out password PWD and the password PWD input at step ST22 are compared. When they coincide, the following processing is carried out.

### Step ST24:

The bio-information detection unit 35a of the authentication apparatus 15a detects the fingerprint information of the user 12a.

### Step ST25:

The authentication unit 36a of the authentication apparatus 15a reads out the fingerprint information of the user 12a stored in the storage unit 31a.

### Step ST26:

The authentication unit 36a compares the fingerprint information read out at step ST25 and the fingerprint information detected by the bio-information detection unit 35a at step ST24 and authenticates the legitimacy of the user 12a based on the result of the comparison.

Note that, the example of the operation in the case where the user 12a authenticates itself by using the authentication apparatus 15a is the same as the example of the operation mentioned above except for the points that the voice information of the user 12a is detected at step ST24, the voice information of the user 12a is read out at step ST25, and the authentication is carried out by comparing the voice information of the user 12a at step ST26.

As explained above, according to the authentication system 91, the user 12a can perform the authentication using the fingerprint information at the authentication apparatus 15a and perform the authentication using the voice information at the authentication apparatus 15b by using one authentication card 14.

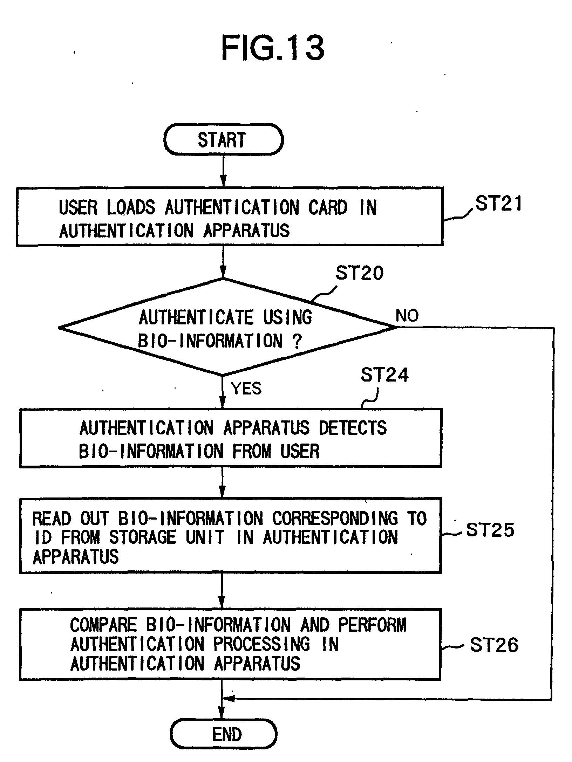

Note that, in the present embodiment, for example, as shown in FIG. 13, after the processing of step ST21 explained in FIG. 12 is terminated, it is also possible even if the processing for deciding whether or not the bio-information is to be authenticated is carried out by the authentication apparatus (ST20). When it is decided that the bio-information is to be authenticated, the processing of steps ST24 to ST26 shown in FIG. 12 is carried out, while when it is decided that the bio-information is not to be authenticated, the processing is terminated.

### Fourth Embodiment

The present embodiment is an embodiment corresponding to the sixth and seventh aspects of the invention.

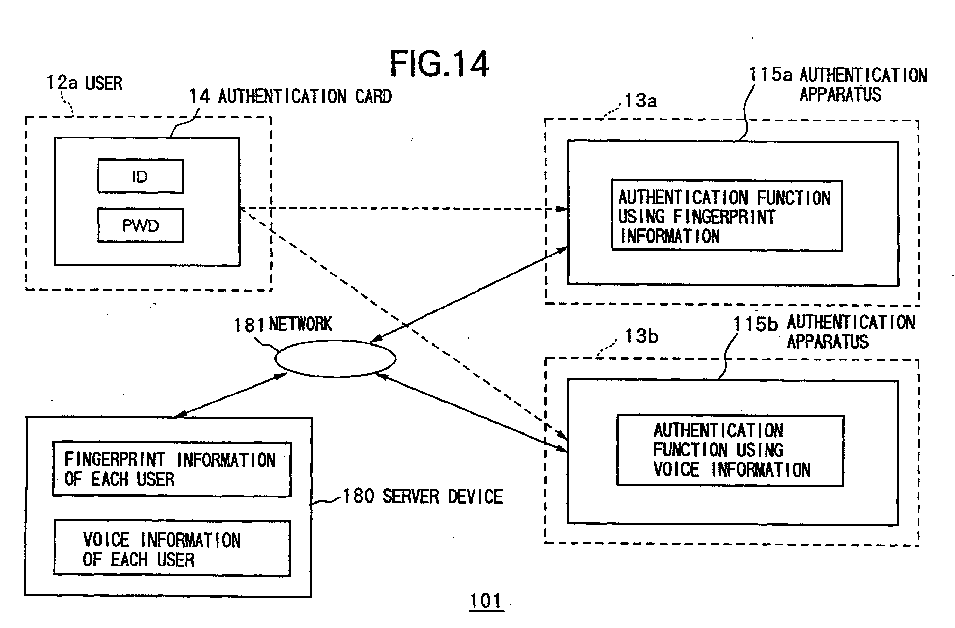

FIG. 14 is an overall view illustrating the configuration of an authentication system 101 of the present embodiment.

As shown in FIG. 14, the authentication system 101 authenticates the user 12a using the authentication card 14 used by the user 12a, an authentication apparatus 115a used by the business 13a, an authentication apparatus 115b used by the business 13b, and a server device 180.

The authentication apparatuses 115a and 115b and the server device 180 are connected to a network 181, for example, the Internet.

The authentication card 14 is the same as that explained in the second embodiment using FIG. 4.

The authentication card 14 corresponds to the authentication module of the present invention, the authentication apparatuses 115a and 115b correspond to the authentication apparatus of the present invention, and the server device 180 corresponds to the server device of the present invention.

### [Authentication Apparatus 115a]

The authentication apparatus 115a is built in for example the ATM of a bank or a personal computer.

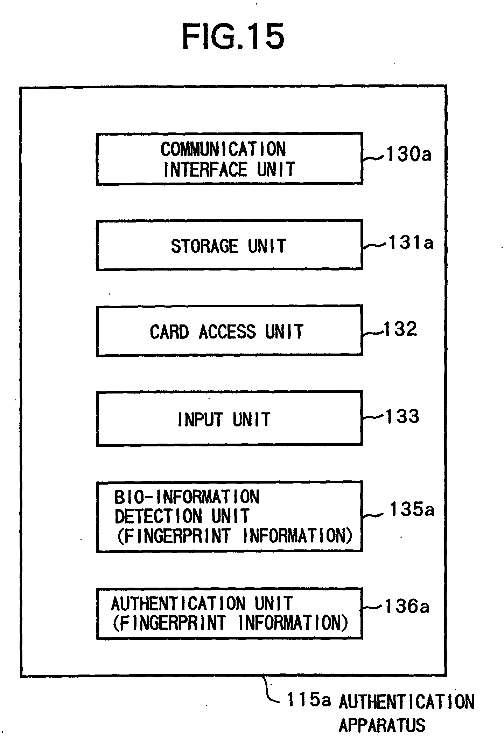

FIG. 15 is a functional block diagram illustrating the authentication apparatus 115a shown in FIG. 14.

As shown in FIG. 15, the authentication apparatus 115a has for example a communication interface unit 30a, a storage unit 131a, a card access unit 132, an input unit 133, a bio-information detection unit 135a, and an authentication unit 136a.

Here, the card access unit 132 corresponds to the reading means of the present invention, the bio-information detection unit 135a corresponds to the detecting means of the present invention, and the authentication unit 136a corresponds to the authenticating means of the present invention.

The communication interface unit 130a is the interface for transmitting and receiving information such as fingerprint information with the server device 180 via the network 181.

The storage unit 131a is for example a hard disk drive or semiconductor memory and stores for example the fingerprint information received from the server device 180.

The card access unit 132 is the same as the card access unit 32 explained by using FIG. 5 in the second embodiment.

The input unit 133 is the same as the input unit 33 explained by using FIG. 5 in the second embodiment.

The bio-information detection unit 135a detects the fingerprint information of the user 12a.

The authentication unit 136a compares the fingerprint information corresponding to the user identification information ID read out from the authentication card 14 by the card access unit 132 with the fingerprint information detected by the bio-information detection unit 135a and authenticates the legitimacy of the user 12a based on the result of the comparison.

### [Authentication Apparatus 115b]

The authentication apparatus 115b is built in for example the ATM of a bank or a personal computer.

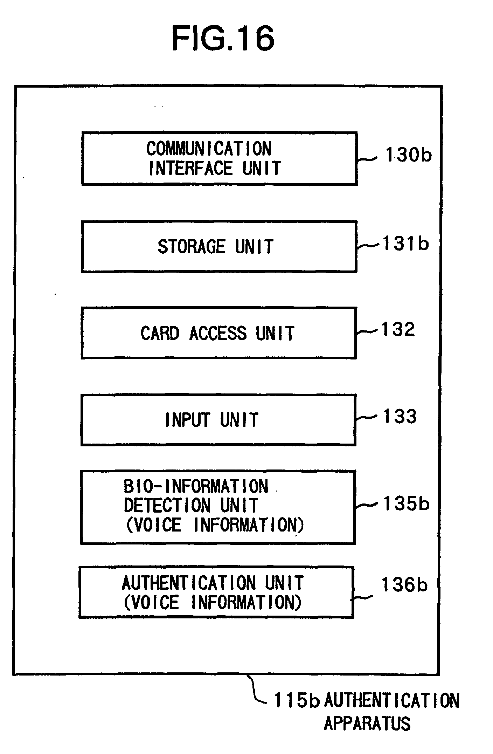

FIG. 16 is a functional block diagram illustrating the authentication apparatus 115b shown in FIG. 14.

As shown in FIG. 16, the authentication apparatus 115b has for example a communication interface unit 130b, a storage unit 131b, the card access unit 132, the input unit 133, a bio-information detection unit 135b, and an authentication unit 136b.

Here, the card access unit 132 corresponds to the reading means of the present invention, the bio-information detection unit 135b corresponds to the detecting means of the present invention, and the authentication unit 136b corresponds to the authenticating means of the present invention.

The communication interface unit 130b is the interface for transmitting and receiving information such as fingerprint information with the server device 180 via the network 181.

The storage unit 131b is for example a hard disk drive or semiconductor memory, and stores for example the voice information received from the server device 180.

The card access unit 132 is the same as the card access unit 32 explained by using FIG. 5 in the second embodiment.

The input unit 133 is the same as the input unit 33 explained by using FIG. 5 in the second embodiment.

The bio-information detection unit 135b detects the voice information of the user 12a.

The authentication unit 136b compares the voice information corresponding to the user identification information ID read out from the authentication card 14 by the card access unit 132 with the voice information detected by the bio-information detection unit 135b and authenticates the legitimacy of the user 12b based on the result of the comparison.

### [Server Device 180]

The server device 180 stores the fingerprint information and the voice information for each of a plurality of users including the users 12a and 12b linked with the user identification information ID.

The server device 180 transmits the user identification information ID designated by the request and the fingerprint information or voice information corresponding to the type of the bio-information to the authentication apparatuses 115a and 115b via the network 181 in response to a request from the authentication apparatuses 115a and 115b.

Below, an explanation will be made of an example of the operation of the authentication system 101.

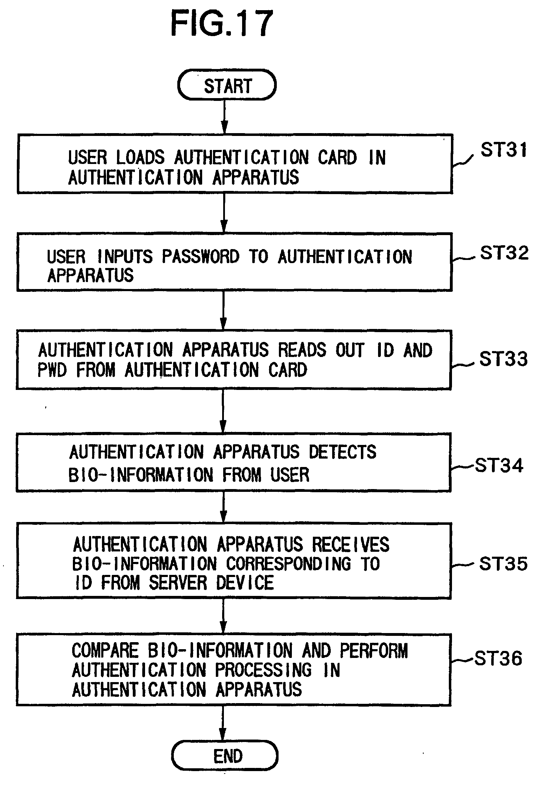

FIG. 17 is a flow chart for explaining an example of the operation of the authentication system 101 shown in FIG. 14.

Below, an explanation will be made of a case where the user 12a authenticates itself by using the authentication apparatus 115a.

### Step ST31:

The user 12a places the authentication card 14 at a position where it can be read out by the card access unit 132 of the authentication apparatus 115a.

### Step ST32:

The user 12a operates the input unit 133 of the authentication apparatus 115a to input the password PWD.

### Step ST33:

The card access unit 132 of the authentication apparatus 115a reads out the user identification information ID and the password PWD from the storage unit 20 of the authentication card 14 and stores it in the storage unit 131a. Then, it compares the read out password PWD and the password PWD input at step ST32 and, when they coincide, perform the following processing.

### Step ST34:

The bio-information detection unit 135a of the authentication apparatus 115a detects the fingerprint information of the user 12a.

### Step ST35:

The authentication unit 136a of the authentication apparatus 115a transmits the request specifying the user identification information ID read out at step ST33 to the server device 180 via the communication interface unit 130a and the network 181. In response to the request, it transmits the fingerprint information corresponding to the user identification information ID via the network 181 from the server device 180 to the authentication apparatus 115a and stores it in the storage unit 131a.

### Step ST36:

The authentication unit 136a compares the fingerprint information received at step ST35 and the fingerprint information detected by the bio-information detection unit 135a at step ST34 and authenticates the legitimacy of the user 12a based on the result of the comparison.

Note that the example of the operation in the case where the user 12a authenticates itself by using the authentication apparatus 115b is the same as the example of the operation mentioned above except for the points that the voice information of the user 12a is detected at step ST34, the voice information of the user 12a is received at step ST35, and the authentication is carried out by comparing the voice information of the user 12a at step ST36.

As explained above, according to the authentication system 101, the user 12a can perform the authentication using the fingerprint information at the authentication apparatus 115a and perform the authentication using the voice information at the authentication apparatus 115b by using one authentication card 14.

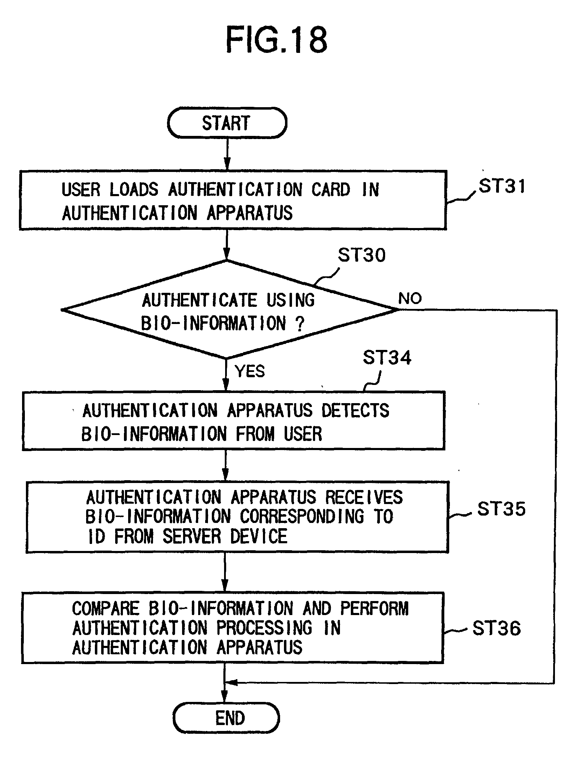

Note that, in the present embodiment, for example, as shown in FIG. 18, after the processing of step ST31 explained in FIG. 17 is terminated, it is also possible if the processing for deciding whether or not the bio-information is to be authenticated is carried out by the authentication apparatus (ST30), the processing of steps ST34 to ST36 shown in FIG. 17 is carried out when it is decided that the bio-information is to be authenticated, and the processing is terminated when it is decided that the bio-information is not to be authenticated.

### Fifth Embodiment

The present embodiment is an embodiment corresponding to the eighth and ninth aspects of the invention.

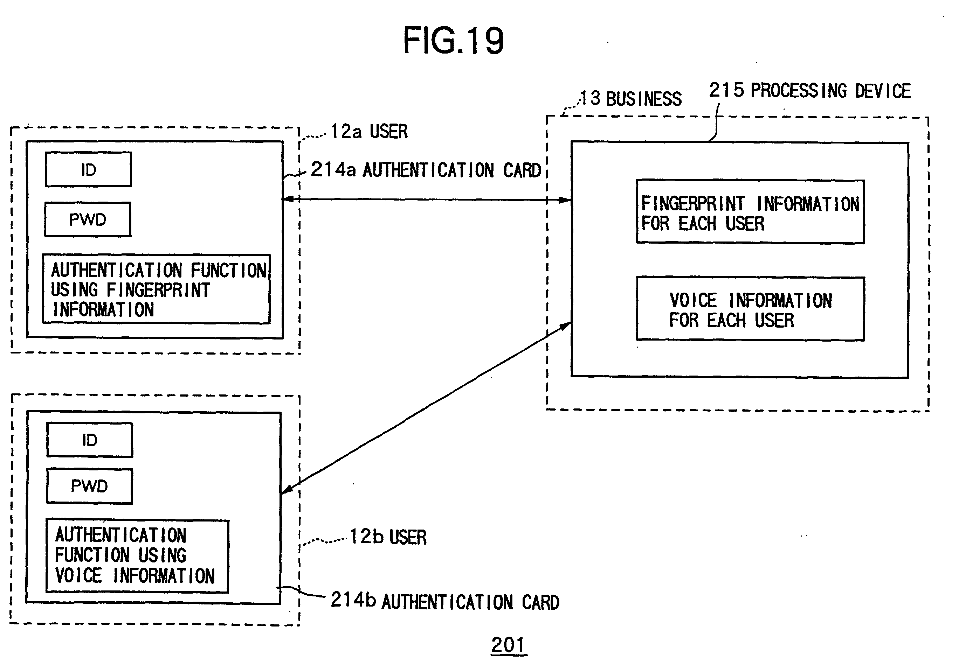

FIG. 19 is an overall view illustrating the configuration of an authentication system 201 of the present embodiment.

As shown in FIG. 19, the authentication system 201 authenticates the users 12a and 12b by using an authentication card 214a used by the user 12a, an authentication card 214b used by the user 12b, and a processing device 215 used by the business 13.

Here, the authentication card 214a corresponds to the first authentication module of the present invention, the authentication card 214b corresponds to the second authentication module of the present invention, and the processing device 215 corresponds to the processing device of the present invention.

Below, an explanation will be made of the authentication cards 214a and 214b and the processing device 215.

### [Authentication Card 214a]

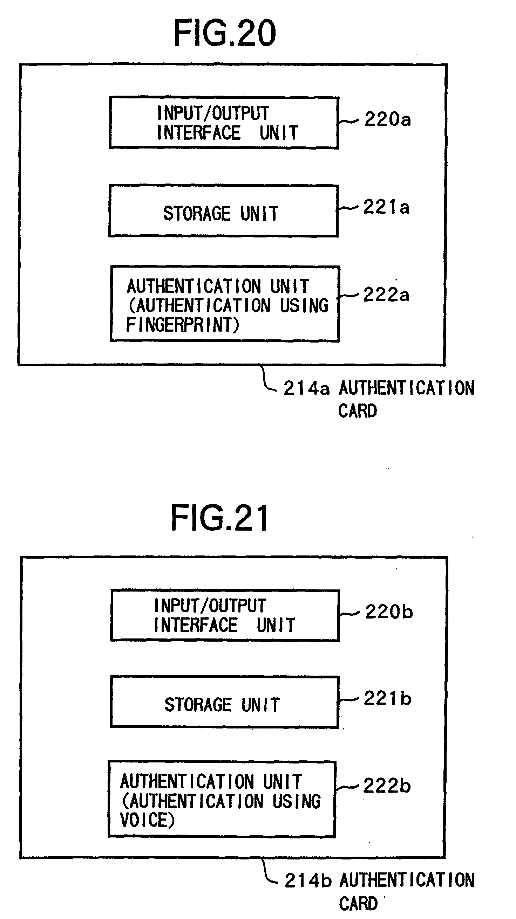

FIG. 20 is a view for explaining the authentication card 214a shown in FIG. 19.

As shown in FIG. 20, the authentication card 214a has for example an input/output interface unit 220a, a storage unit 221a, and an authentication unit 222a.

Here, the storage unit 221a corresponds to the first storing means of the present invention, and the authentication unit 222a corresponds to the first authenticating means of the present invention.

The input/output interface unit 220a inputs and outputs information with the processing device 215.

The storage unit 221a is a magnetic strip, IC (integrated circuit), etc. and stores the user identification information ID allocated to the user 12a and the password PWD determined by the user 12a at the time of issuance of the authentication card 214a.

The authentication unit 222a compares the detected fingerprint information of the user 12a input from the processing device 215 via the input/output interface unit 220a with the fingerprint information stored in advance, authenticates the legitimacy of the user 12a based on the result of the comparison, and outputs the result of authentication to the processing device 215 via the input/output interface unit 220a.

### [Authentication Card 214b]

FIG. 21 is a view for explaining the authentication card 214b shown in FIG. 19.

As shown in FIG. 21, the authentication card 214b has for example an input/output interface unit 220b, a storage unit 221b, and an authentication unit 222b.

Here, the storage unit 221b corresponds to the second storing means of the present invention, and the authentication unit 222b corresponds to the second authenticating means of the present invention.

The input/output interface unit 220b inputs and outputs the information with the processing device 215.

The storage unit 221b is a magnetic strip, IC (integrated circuit), etc. and stores the user identification information ID allocated to the user 12b and the password PWD determined by the user 12b at the time of issuance of the authentication card 214b.

The authentication unit 222b compares the detected voice information of the user 12b input from the processing device 215 via the input/output interface unit 220b with the voice information stored in advance, authenticates the legitimacy of the user 12b based on the result of the comparison, and outputs the result of authentication to the processing device 215 via the input/output interface unit 220b.

### [Processing Device 215]

The processing device 215 is built in for example the ATM of a bank or a personal computer.

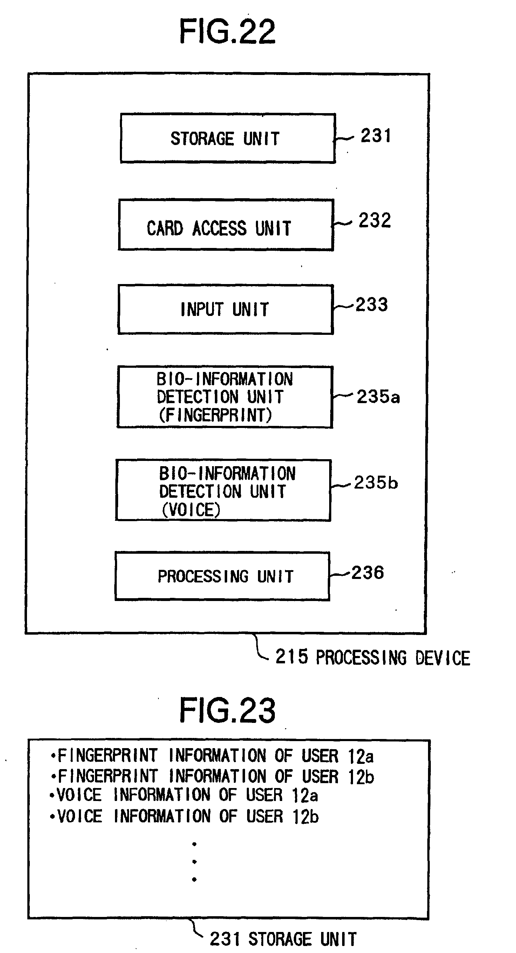

FIG. 22 is a functional block diagram illustrating the processing device 215 shown in FIG. 19.

As shown in FIG. 22, the processing device 215 has for example a storage unit 231, card access unit 232, input unit 233, bio-information detection unit 235, and processing unit 236.

Here, the storage unit 231 corresponds to the storing means of the present invention, the card access unit 232 corresponds to the reading means and outputting means of the present invention, the bio-information detection unit 235a corresponds to the first detecting means of the present invention, the bio-information detection unit 235b corresponds to the second detecting means of the present invention, and the processing unit 236 corresponds to the processing means of the present invention.

The storage unit 231 is for example a hard disk drive or semiconductor memory and stores the fingerprint information and voice information for each user.

Concretely, the storage unit 231 stores the fingerprint information of the user 12a and the voice information of the user 12b as shown in FIG. 23.

The card access unit 232 reads out the user identification information ID from the storage units 221a and 221b of the authentication cards 214a and 214b by the contact method or non-contact method and, at the same time, inputs and outputs the predetermined information with the authentication card 214.

The input unit 233 is for example a keyboard or touch panel and is used for the users 12a and 12b to input passwords PWD.

The bio-information detection unit 235a detects the fingerprint information of the user.

The bio-information detection unit 235b detects the voice information of the user.

The processing unit 236 performs for example account debiting processing or transaction processing based on the result of authentication input from the authentication cards 214a and 214b.

Below, an explanation will be made of an example of the operation of the authentication system 201.

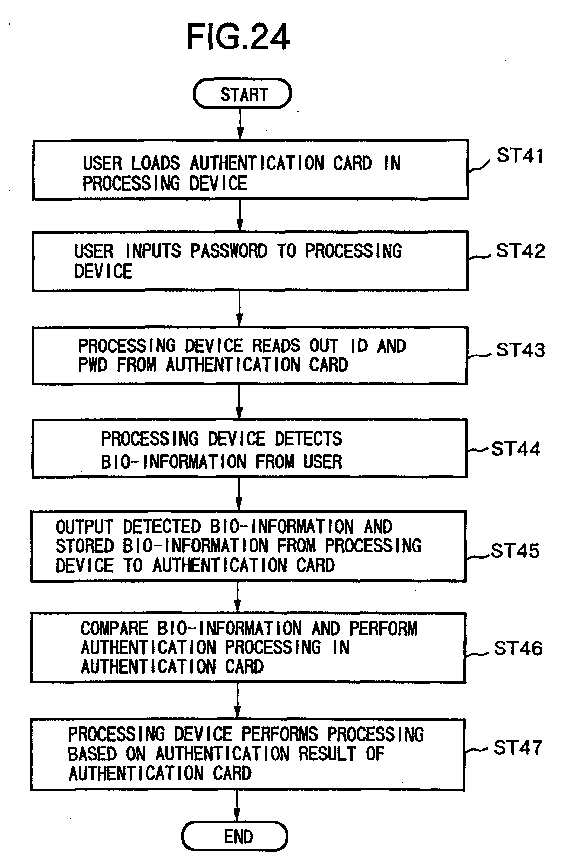

FIG. 24 is a flow chart for explaining the example of the operation of the authentication system 201 shown in FIG. 19.

### Step ST41:

The user 12a places the authentication card 214a at a position where it can be read out by the card access unit 232 of the processing device 215.

### Step ST42:

The user 12a operates the input unit 233 of the processing device 215 to input the password PWD.

### Step ST43:

The card access unit 232 of the processing device 215 reads out the user identification information ID and the password PWD from the storage unit 221a of the authentication card 214a and stores it in the storage unit 231. Then, it compares the read out password PWD and the password PWD input at step ST42 and, when they coincide, perform the following processing.

### Step ST44:

The bio-information detection unit 235a of the processing device 215 detects the fingerprint information of the user 12a.

### Step ST45:

The card access unit 232 of the processing device 215 outputs to the authentication card 214a the fingerprint information of the user 12a read out from the storage unit 231 and the fingerprint information of the user 12a detected at step ST44.

### Step ST46:

The authentication unit 222a of the authentication card 414 compares the fingerprint information of the user 12a read out from the storage unit 231 and the detected fingerprint information of the user 12a which were input at step ST45 and autheticates the legitimacy of the user 12a based on the result of the comparison. The result of the authentication is output from the input/output interface unit 220a to the processing device 215.

### Step ST47:

The processing unit 236 of the processing device 215 performs for example account debiting processing or transaction processing when the user 12a is the legitimate user based on the result of authentication input at step ST46.

As explained above, the authentication system 201 can authenticate the user by using one bio-information selected from among a plurality of bio-information in accordance with the characteristics of the authentication card.

For this reason, the authentication system 201 can authenticate the user with a high reliability by using the suitable bio-information in accordance with the physical characteristics of the user. Namely, the possibility that the person in question is not recognized (authenticated) as the person in question or a user not the person in question is recognized as the person in question can be lowered.

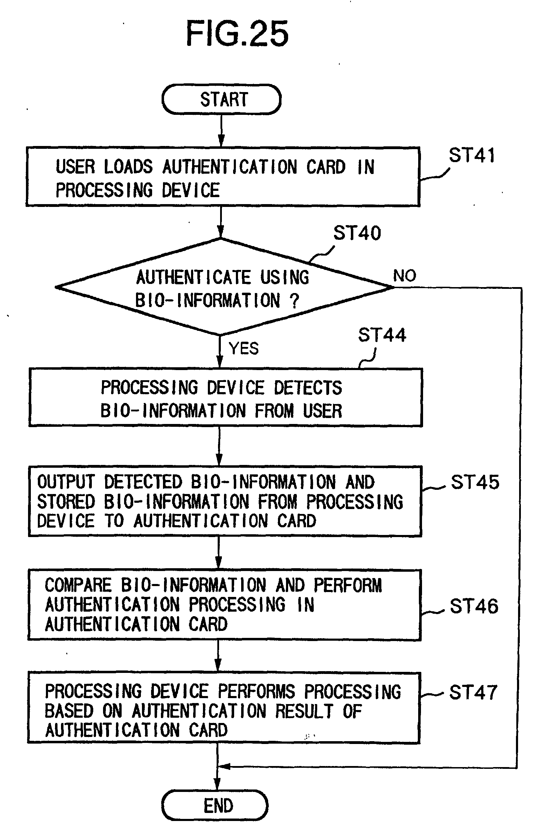

Note that, in the present embodiment, for example, as shown in FIG. 25, after the processing of step ST41 explained in FIG. 24 is terminated, it is also possible if processing for deciding whether or not the bio-information is to be authenticated is carried out by the authentication card or authentication apparatus (ST40), the processing of steps ST44 to ST47 shown in FIG. 24 is carried out when it is decided that the bio-information is to be authenticated, while the processing is terminated when it is decided that the bio-information is not to be authenticated.

### Sixth Embodiment

The present invention is an embodiment corresponding to the 10th and 11th aspects of the invention.

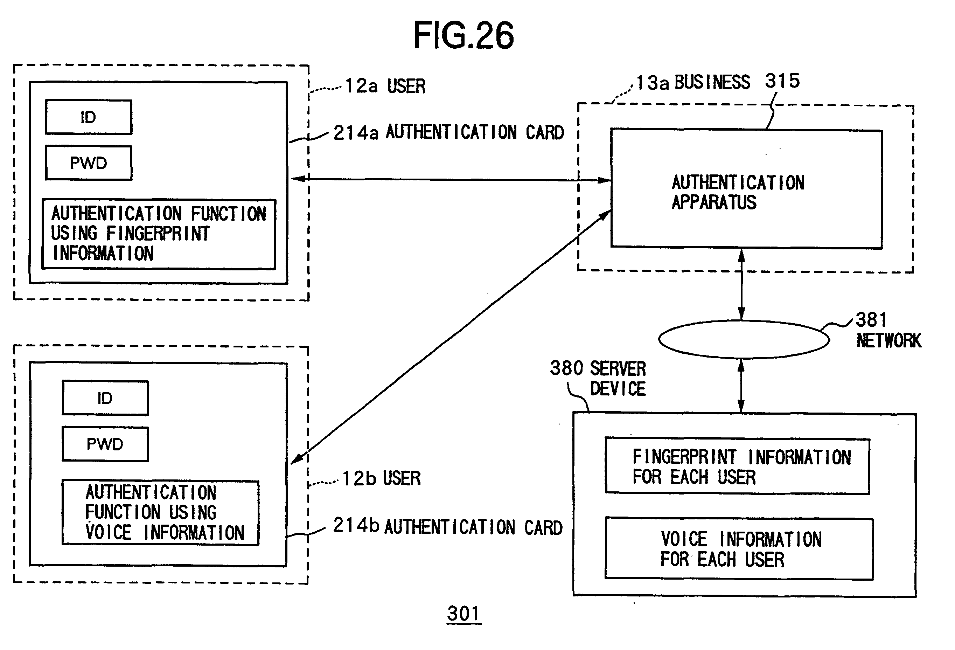

FIG. 26 is an overall view illustrating the configuration of an authentication system 301 of the present embodiment.

As shown in FIG. 26, the authentication system 301 authenticates the users 12a and 12b by using an authentication card 214a used by the user 12a, an authentication card 214b used by the user 12b, a processing device 315 used by the business 13, and a server device 380.

The authentication cards 214a and 214b are the same as those explained by using FIG. 20 and FIG. 21 in the fifth embodiment.

The authentication card 214a corresponds to the first authentication module of the present invention, the authentication card 214b corresponds to the second authentication module of the present invention, the processing device 315 corresponds to the processing device of the present invention, and the server device 380 corresponds to the server device of the present invention.

### [Processing Device 315]

The processing device 315 is built in for example the ATM of a bank or a personal computer.

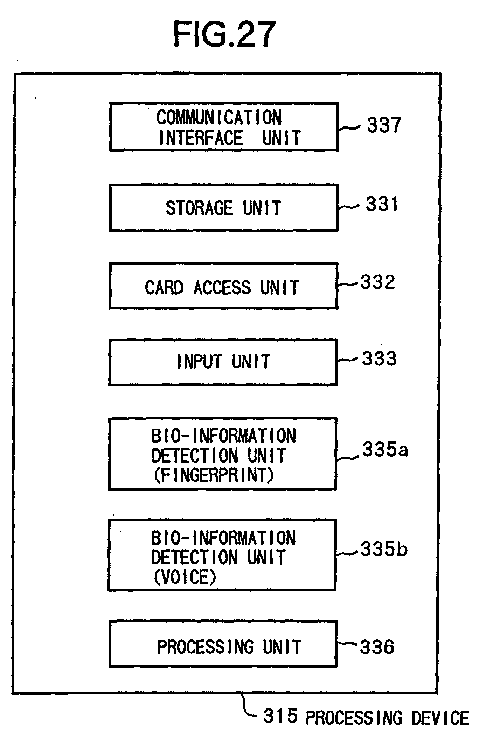

FIG. 27 is a functional block diagram illustrating the processing device 315 shown in FIG. 26.

As shown in FIG. 27, the processing device 315 has for example a communication interface unit 337, a storage unit 331, a card access unit 332, an input unit 333, a bio-information detection unit 335, and a processing unit 336.

Here, the card access unit 332 corresponds to the reading means and outputting means of the present invention, the bio-information detection unit 335a corresponds to the first detecting means of the present invention, the bio-information detection unit 335b corresponds to the second detecting means of the present invention, and the processing unit 336 corresponds to the processing means of the present invention.

The communication interface unit 337 transmits and receives data with the server device 380 via the network 381.

The storage unit 331 is for example a hard disk drive or semiconductor memory.

The card access unit 332 reads out the user identification information ID from the storage units 221a and 221b of the authentication cards 214a and 214b by the contact method or non-contact method and, at the same time, inputs and outputs the predetermined information with the authentication cards 214a and 214b.

The input unit 333 is for example a keyboard or touch panel and is used for the users 12a and 12b to input the passwords PWD.

The bio-information detection unit 335a detects the fingerprint information of the user.

The bio-information detection unit 335b detects the voice information of the user.

The processing unit 336 performs, for example, account debiting processing or transaction processing based on the results of authentication input from the authentication cards 214a and 214b.

### [Server Device 380]

The server device 380 stores the fingerprint information and the voice information for each of a plurality of users including the users 12a and 12b linked with the user identification information ID.

The server device 380 transmits the user identification information ID designated by the request and the fingerprint information or voice information corresponding to the type of the bio-information to the authentication apparatus 315 via the network 381 in response to the request from the authentication apparatus 315.

Below, an explanation will be made of an example of the operation of the authentication system 301.

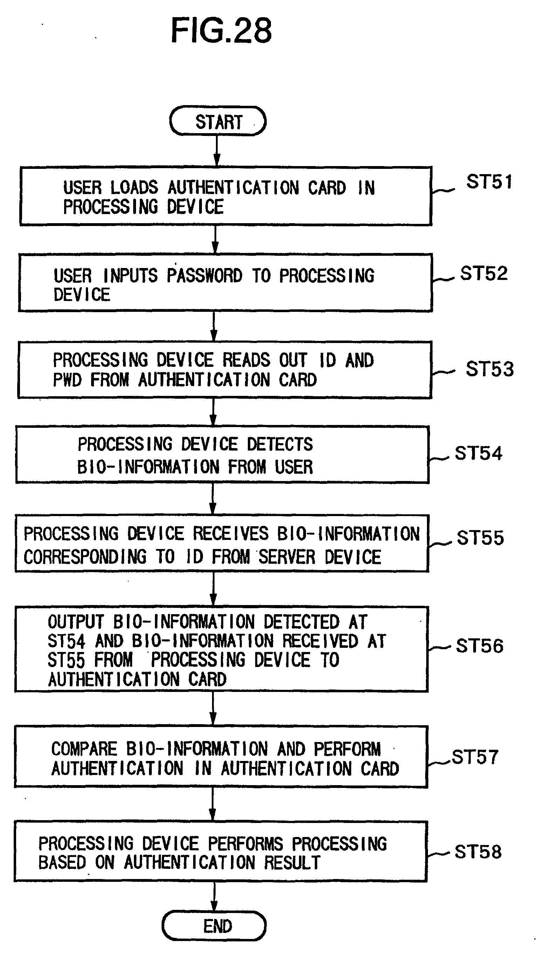

FIG. 28 is a flow chart for explaining an example of the operation of the authentication system 301 shown in FIG. 26.

### Step ST51:

The user 12a places the authentication card 214a at a position where it can be read out by the card access unit 332 of the processing device 315.

### Step ST52:

The user 12a operates the input unit 333 of the processing device 315 to input the password PWD.

### Step ST53:

The card access unit 332 of the processing device 315 reads out the user identification information ID and the password PWD from the storage unit 221a of the authentication card 214a and stores it in the storage unit 331. Then, it compares the read out password PWD and the password PWD input at step ST52 and, when they coincide, performs the following processing.

### Step ST54:

The bio-information detection unit 335a of the processing device 315 detects the fingerprint information of the user 12a.

### Step ST55:

The communication interface unit 337 of the processing device 315 outputs to the server device 380 via the network 381 the user identification information ID read out at step ST53 and the request designating the fingerprint as the type of the bio-information. In response to the request, the fingerprint information of the user 12a is transmitted from the server device 380 via the network 381 to the processing device 315 and is stored in the storage unit 331.

### Step ST56:

The card access unit 332 of the processing device 315 outputs to the authentication card 214a the fingerprint information of the user 12a read out from the storage unit 331 and the fingerprint information of the user 12a detected at step ST54.

### Step ST57:

The authentication unit 214a of the authentication card 214a compares the fingerprint information of the user 12a read out from the storage unit 331 and the detected fingerprint information of the user 12a which were input at step ST56 and authenticates the legitimacy of the user 12a based on the result of the comparison. The result of the authentication is output from the input/output interface unit 220a to the processing device 315.

### Step ST58:

The processing unit 336 of the processing device 315 performs, for example, account debiting processing or transaction processing when the user 12a is the legitimate user based on the result of authentication input at step ST57.

As explained above, the authentication system 301 can authenticate the user by using one bio-information selected from among a plurality of bio-information in accordance with the characteristics of the authentication card.

For this reason, the authentication system 301 can authenticate the user with a high reliability by using suitable bio-information in accordance with the physical characteristics of the user. Namely, the possibility that the person in question is not recognized (authenticated) as the person in question or a user not the person in question is recognized as the person in question can be lowered.

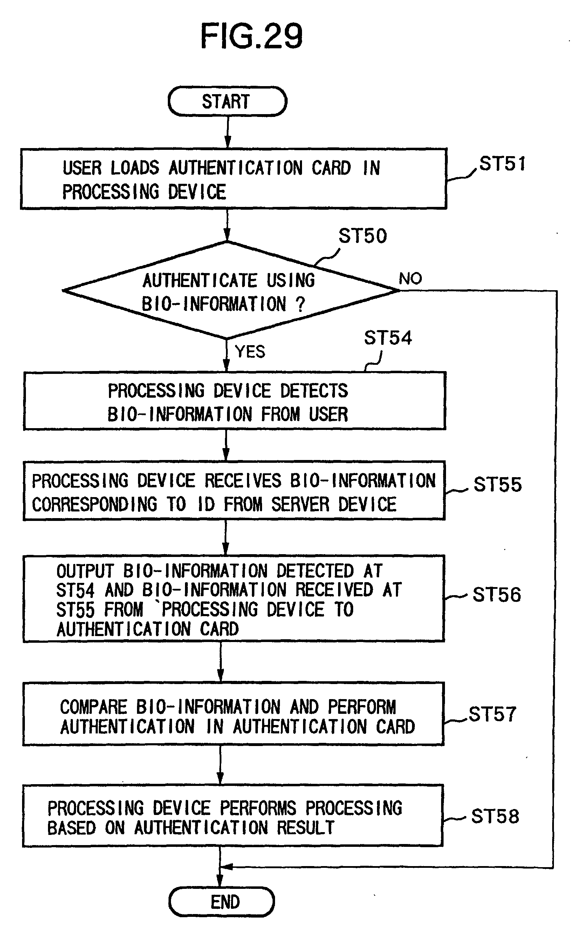

Note that, in the present embodiment, for example, as shown in FIG. 29, after the processing of step ST51 explained in FIG. 28 is terminated, it is also possible if processing for deciding whether or not the bio-information is to be authenticated is carried out by the authentication card or authentication apparatus (ST50), the processing of steps ST54 to ST58 shown in FIG. 28 is carried out when it is decided that the bio-information is to be authenticated, while the processing is terminated when it is decided that the bio-information is not to be authenticated.

### Seventh Embodiment

The present embodiment is an embodiment corresponding to the 12th and 13th aspects of the invention.

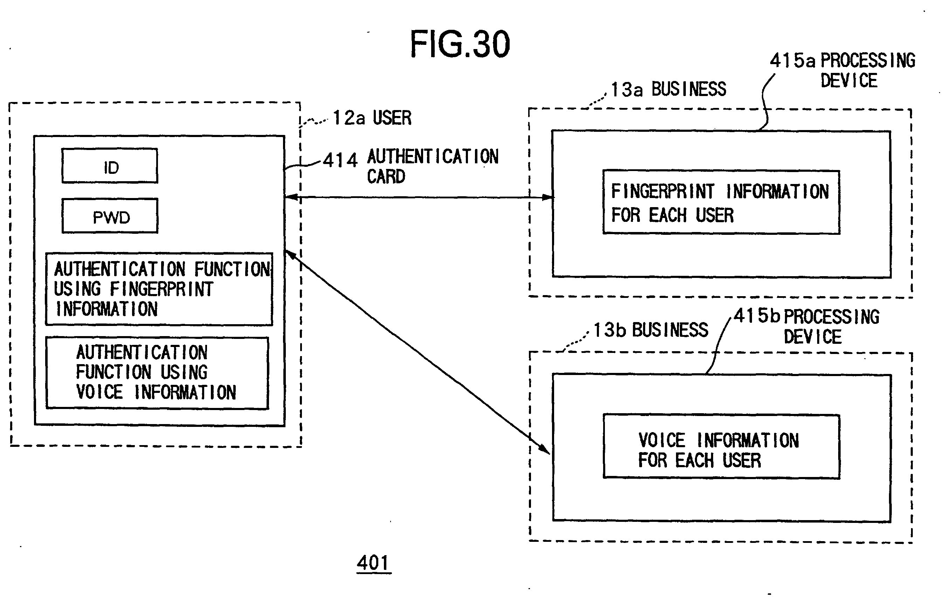

FIG. 30 is an overall view illustrating the configuration of an authentication system 401 of the present embodiment.

As shown in FIG. 30, the authentication system 401 authenticates the user 12a by using an authentication card 414 used by the user 12a, a processing device 415a used by a business 13a, and a processing device 415b used by a business 13b.

The authentication card 414 corresponds to the authentication module of the present invention, the processing device 415a corresponds to the first processing device of the present invention, and the processing device 415b corresponds to the second processing device of the present invention.

Below, an explanation will be made of the authentication card 414 and the processing device 415.

### [Authentication Card 414]

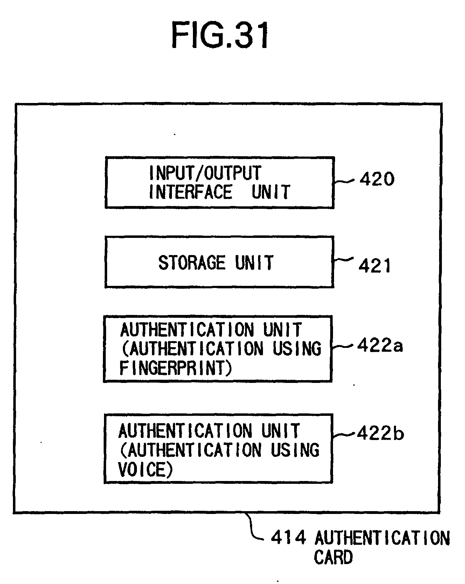

FIG. 31 is a view for explaining the authentication card 414 shown in FIG. 30.

As shown in FIG. 31, the authentication card 414 has for example an input/output interface unit 420, a storage unit 421, and authentication units 422a and 422b.

Here, the storage unit 421 corresponds to the storing means of the present invention, and the authentication units 422a and 422b correspond to the authenticating means of the present invention.

The input/output interface unit 420 inputs and outputs the information with the processing devices 415a and 415b.

The storage unit 421 is a magnetic strip, IC (integrated circuit), or the like and stores the user identification information ID allocated to the user 12a and the password PWD determined by the user 12a at the time of issuance of the authentication card 414.

The authentication unit 422a compares the detected fingerprint information of the user 12a input from the processing device 415a via the input/output interface unit 420 with the fingerprint information stored in advance, authenticates the legitimacy of the user 12a based on the result of the comparison, and outputs the result of authentication to the processing device 415a via the input/output interface unit 420.

The authentication unit 422b compares the detected voice information of the user 12a input from the processing device 415b via the input/output interface unit 420 with the voice information stored in advance, authenticates the legitimacy of the user 12a based on the result of the comparison, and outputs the result of authentication via the input/output interface unit 420 to the processing device 415b.

### [Processing Device 415a]

The processing device 415a is built in for example the ATM of a bank or a personal computer.

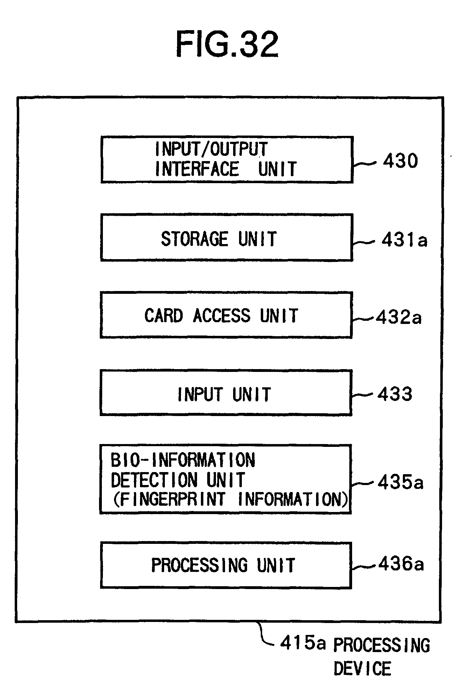

FIG. 32 is a functional block diagram illustrating the processing device 415a shown in FIG. 30.

As shown in FIG. 32, the processing device 415a has for example a storage unit 431a, a card access unit 432a, an input unit 433, a bio-information detection unit 435a, and a processing unit 436a.

Here, the storage unit 431a corresponds to the storing means of the present invention, the card access unit 432a corresponds to the first reading means and first outputting means of the present invention, the bio-information detection unit 435a corresponds to the first detecting means of the present invention, and the processing unit 436a corresponds to the first processing means of the present invention.

The storage unit 431a is for example a hard disk drive or semiconductor memory.

The card access unit 232 reads out the user identification information ID and password PWD from the storage unit 421 of the authentication card 414 by the contact method or non-contact method and, at the same time, inputs and outputs the predetermined information with the authentication card 414.

The input unit 433 is for example a keyboard or touch panel and is used for the user 12a to input password PWD.

The bio-information detection unit 435a detects the fingerprint information of the user.

The processing unit 436a performs, for example, account debiting processing or transaction processing based on the result of authentication input from the authentication card 414.

### [Processing Device 415b]

The processing device 415b is built in for example the ATM of a bank or a personal computer.

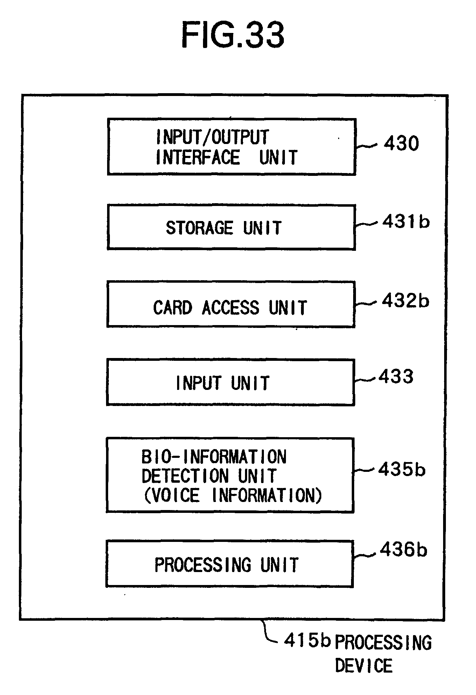

FIG. 33 is a functional block diagram illustrating the processing device 415b shown in FIG. 30.

As shown in FIG. 33, the processing device 415b has for example a storage unit 431b, a card access unit 432b, an input unit 433, a bio-information detection unit 435b, and a processing unit 436b.

Here, the functions of the storage unit 431b, the card access unit 432b, the input unit 433, and the processing unit 436b are the same as those explained by using FIG. 32.

The bio-information detection unit 435b detects the voice information of the user.

Note that, the storage unit 431b corresponds to the second storing means of the present invention, the card access unit 432b corresponds to the second reading means and second outputting means of the present invention, the bio-information detection unit 435b corresponds to the second detecting means of the present invention, and the processing unit 436b corresponds to the second processing means of the present invention.

Below, an explanation will be made of an example of the operation of the authentication system 401.

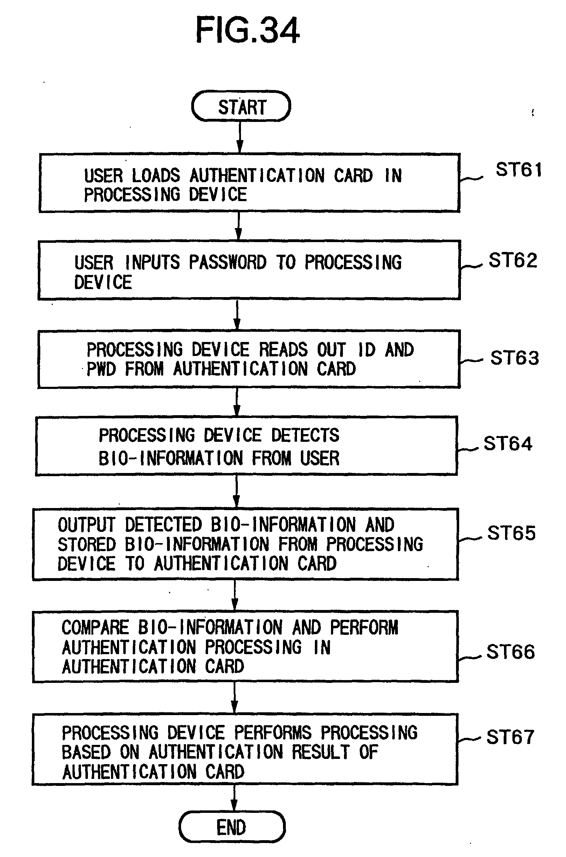

FIG. 34 is a flow chart for explaining an example of the operation of the authentication system 401 shown in FIG. 30.

### Step ST61:

The user 12a places the authentication card 414 at a position where it can be read out by the card access unit 432a of the processing device 415a.

### Step ST62:

The user 12a operates the input unit 433 of the processing device 415a to input the password PWD.

### Step ST63:

The card access unit 432a of the processing device 415a reads out the user identification information ID and the password PWD from the storage unit 421 of the authentication card 414 and stores it in the storage unit 431.

Then, it compares the read out password PWD and the password PWD input at step ST62 and, when they coincide, performs the following processing.

### Step ST64:

The bio-information detection unit 435a of the processing device 415a detects the fingerprint information of the user 12a.

### Step ST65:

The card access unit 432a of the processing device 415a outputs to the authentication card 414 the fingerprint information of the user 12a read out from the storage unit 431 and the fingerprint information of the user 12a detected at step ST 64.

### Step ST66:

The authentication unit 422a of the authentication card 414 compares the fingerprint information of the user 12a read out from the storage unit 431 input at step ST65 and the detected fingerprint information of the user 12a and authenticates the legitimacy of the user 12a based on the result of the comparison. It outputs the result of the authentication from the input/output interface unit 420 to the processing device 415a.

### Step ST67:

The processing unit 436a of the processing device 415a performs, for example, account debiting processing or transaction processing when the user 12a is the legitimate user based on the result of authentication input at step ST66.

As explained above, the authentication system 401, by using one authentication card 414, can authenticate the user at the plurality of processing devices 415a and 415b for performing the authentication by using bio-information of types different from each other.

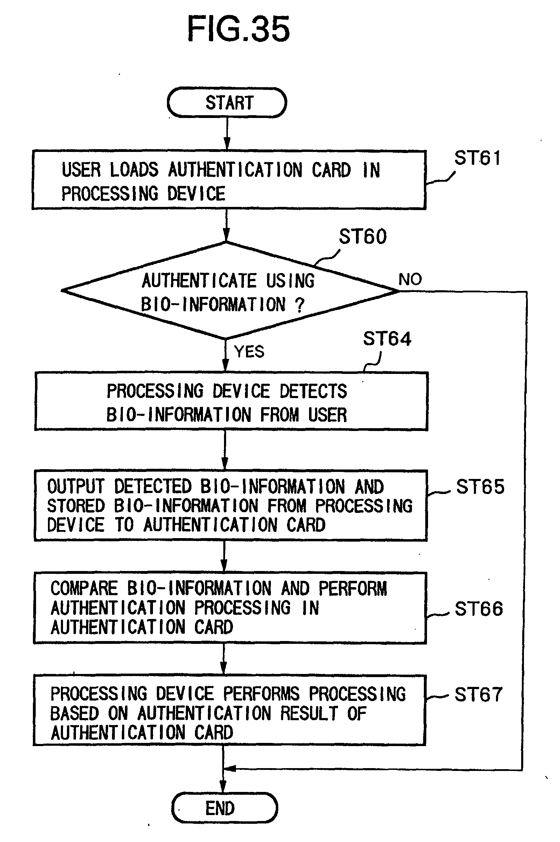

Note that, in the present embodiment, for example, as shown in FIG. 35, after the processing of step ST61 explained in FIG. 34 is terminated, it is also possible if processing for deciding whether or not the bio-information is to be authenticated is carried out by the authentication card or authentication apparatus (ST60), the processing of steps ST64 to ST67 shown in FIG. 34 is carried out when it is decided that the bio-information is to be authenticated, while the processing is terminated when it is decided that the bio-information is not to be authenticated.

### Eighth Embodiment

The present embodiment is an embodiment corresponding to the 14th and 15th aspects of the invention.

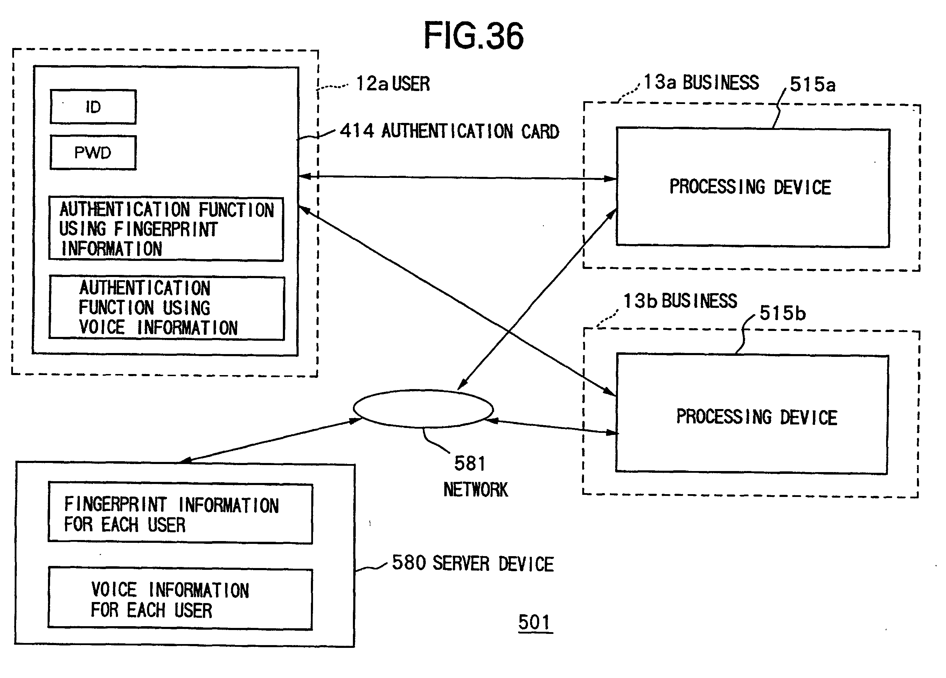

FIG. 36 is an overall view illustrating the configuration of an authentication system 501 of the present embodiment.

As shown in FIG. 36, the authentication system 501 authenticates the user 12a by using the authentication card 414 used by the user 12a, a processing device 515a used by the business 13a, a processing device 515b used by the business 13b, and a server device 580.

The authentication card 414 is the same as that explained in the seventh embodiment by using FIG. 31.

Here, the authentication card 414 corresponds to the authentication module of the present invention, the processing device 515a corresponds to the first processing device of the present invention, the processing device 515b corresponds to the second processing device of the present invention, and the server device 580 corresponds to the server device of the present invention.

Below, an explanation will be made of the processing devices 515a and 515b and the server device 580.

### [Processing Device 515a]

The processing device 515a is built in for example the ATM of a bank or a personal computer.

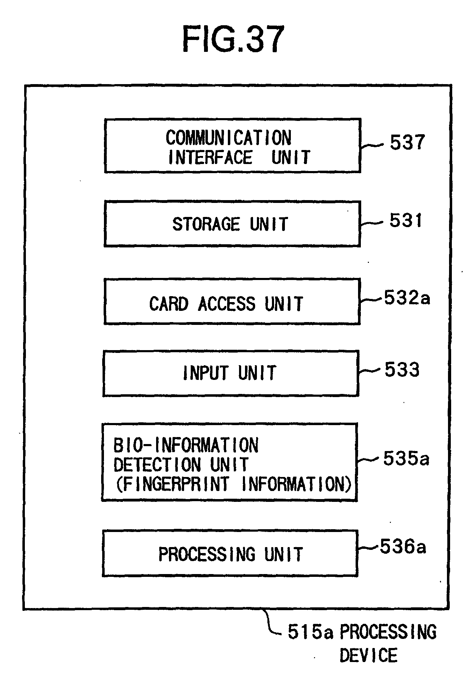

FIG. 37 is a functional block diagram illustrating the processing device 515a shown in FIG. 36.

As shown in FIG. 37, the processing device 515a has for example a communication interface unit 537, a storage unit 531, a card access unit 532a, an input unit 533, a bio-information detection unit 535a, and a processing unit 536a.

Here, the card access unit 532a corresponds to the first reading means and first outputting means of the present invention, the bio-information detection unit 535a corresponds to the first detecting means of the present invention, and the processing unit 536a corresponds to the first processing means of the present invention.

The communication interface unit 537 transmits and receives information with the server device 580 via the network 581.

The storage unit 531 is for example a hard disk drive or semiconductor memory.

The card access unit 532a reads out the user identification information ID and password PWD from the storage unit 421 of the authentication card 414 shown in FIG. 31 by the contact method or non-contact method and, at the same time, inputs and outputs the predetermined information with the authentication card 414.

The input unit 533 is for example a keyboard or touch panel and is used for the user 12a to input the password PWD.

The bio-information detection unit 535a detects the fingerprint information of the user.

The processing unit 536a performs, for example, account debiting processing or transaction processing based on the result of authentication input from the authentication card 414.

### [Processing Device 515b]

The processing device 515b is built in for example the ATM of a bank or a personal computer.

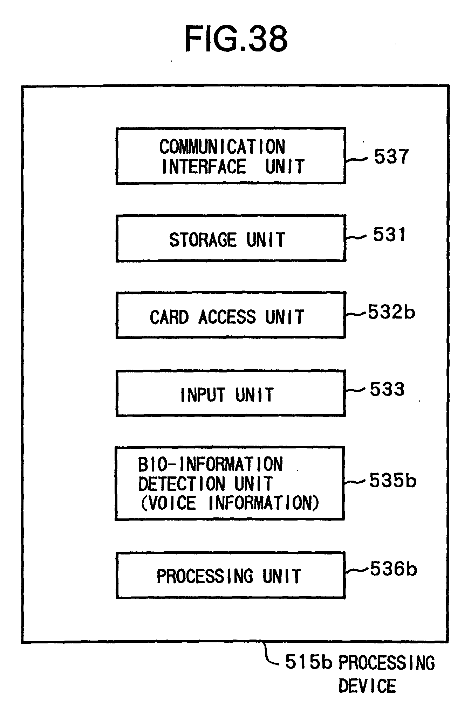

FIG. 38 is a functional block diagram illustrating the processing device 515b shown in FIG. 36.

As shown in FIG. 38, the processing device 515b has for example the storage unit 531, a card access unit 532b, the input unit 533, a bio-information detection unit 535b, and a processing unit 536b.

Here, the functions of the storage unit 531, the card access unit 532b, the input unit 533, and the processing unit 536b are the same as those explained by using FIG. 37.

The bio-information detection unit 535b detects the voice information of the user.

Note that, the card access unit 532b corresponds to the second reading means and second outputting means of the present invention, the bio-information detection unit 535b corresponds to the second detecting means of the present invention, and the processing unit 536b corresponds to the second processing means of the present invention.

### [Server Device 580]

The server device 580 stores the fingerprint information and the voice information for each of a plurality of users including the user 12a linked with the user identification information ID.

The server device 580 transmits the user identification information ID designated by the request and the fingerprint information or voice information corresponding to the type of the bio-information to the authentication apparatuses 515a and 515b via the network 581 in response to a request from the authentication apparatuses 515a and 515b.

Below, an explanation will be made of an example of the operation of the authentication system 501.

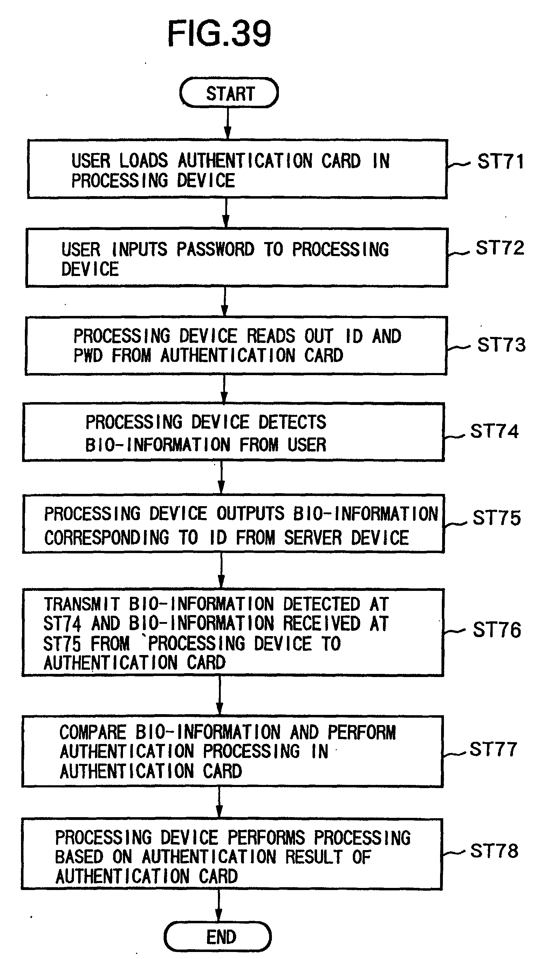

FIG. 39 is a flow chart for explaining an example of the operation of the authentication system 501 shown in FIG. 36.

### Step ST71:

The user 12a places the authentication card 414 at a position where it can be read out by the card access unit 532a of the processing device 515a.

### Step ST72:

The user 12a operates the input unit 533 of the processing device 515a to input the password PWD.

### Step ST73:

The card access unit 532a of the processing device 515a reads out the user identification information ID and the password PWD from the storage unit 421 of the authentication card 414 and stores it in the storage unit 531.

Then, it compares the read out password PWD and the password PWD input at step ST72 and, when they coincide, perform the following processing.

### Step ST74:

The bio-information detection unit 535a of the processing device 515a detects the fingerprint information of the user 12a.

### Step ST75:

The communication interface unit 537 of the processing device 515a outputs to the server device 580 via the network 581 the user identification information ID read out at step ST73 and the request designating the fingerprint as the type of the bio-information. In response to the request, it transmits the fingerprint information of the user 12a from the server device 580 via the network 581 to the processing device 515a and stores it in the storage unit 531.

### Step ST76:

The card access unit 532a of the processing device 515a outputs to the authentication card 414 the fingerprint information of the user 12a read out from the storage unit 531 and the fingerprint information of the user 12a detected at step ST74.

### Step ST77:

The authentication unit 422a of the authentication card 414 shown in FIG. 31 compares the fingerprint information of the user 12a read out from the storage unit 531 and the detected fingerprint information of the user 12a which were input at step ST76 and authenticates the legitimacy of the user 12a based on the result of the comparison. It outputs the result of the authentication from the input/output interface unit 420 to the processing device 515a.

### Step ST78:

The processing unit 536a of the processing device 515a performs, for example, account debiting processing or transaction processing when the user 12a is the legitimate user based on the result of authentication input at step ST77.

As explained above, the authentication system 501 can authenticate the user by using one bio-information selected from among a plurality of bio-information in accordance with the characteristics of the authentication card.

For this reason, the authentication system 501 can authenticate the user with a high reliability by using suitable bio-information in accordance with the physical characteristics of the user. Namely, the possibility that the person in question is not recognized (authenticated) as the person in question or a user not the person in question is recognized as the person in question can be lowered.

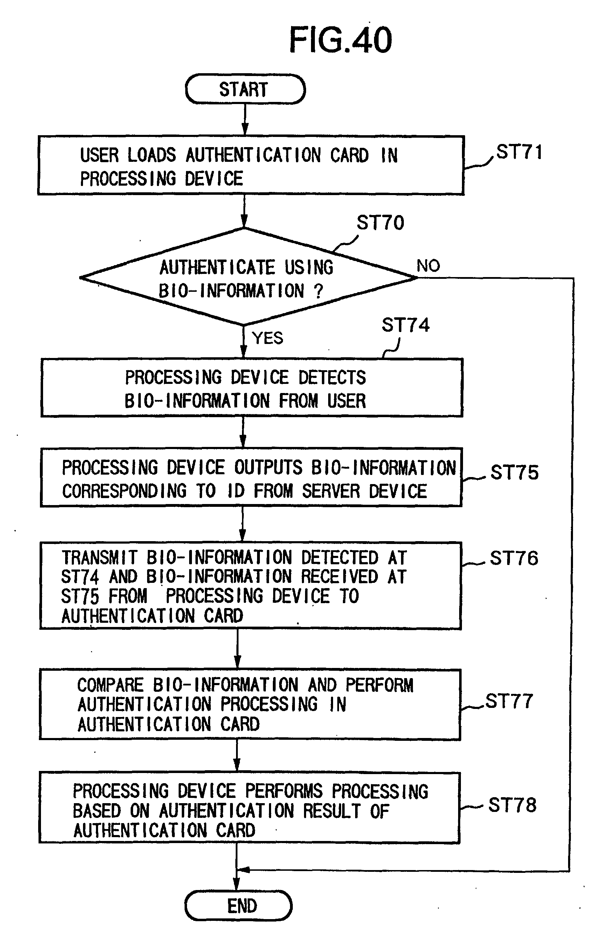

Note that, in the present embodiment, for example, as shown in FIG. 40, after the processing of step ST71 explained in FIG. 39 is terminated, it is also possible if processing for deciding whether or not the bio-information is to be authenticated is carried out by the authentication card or authentication apparatus (ST70), the processing of steps ST74 to ST78 shown in FIG. 39 is carried out when it is decided that the bio-information is to be authenticated, while the processing is terminated when it is decided that the bio-information is not to be authenticated.

### Ninth Embodiment

The present embodiment is an embodiment corresponding to the 16th to 18th aspects of the invention.

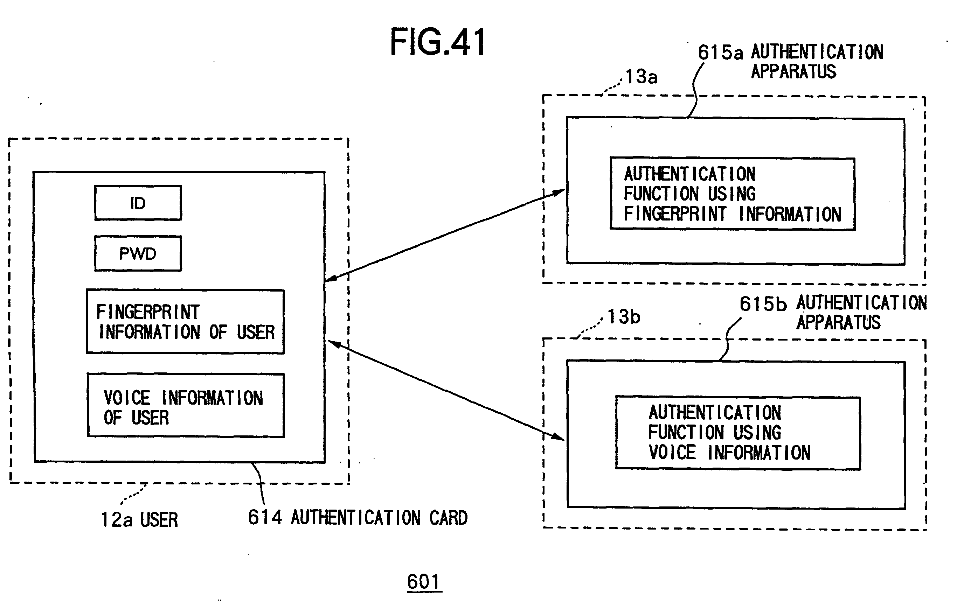

FIG. 41 is an overall view illustrating the configuration of an authentication system 601 of the present embodiment.

As shown in FIG. 41, the authentication system 601 authenticates the user 12a by using an authentication card 614 used by the user 12a, an authentication apparatus 615a used by the business 13a, and an authentication apparatus 615b used by the business 13b.

Here, the authentication card 614 corresponds to the authentication module of the present invention, and the authentication apparatuses 615a and 615b correspond to the authentication apparatus of the present invention.

Below, an explanation will be made of the authentication card 614 and the authentication apparatuses 615a and 615b.

### [Authentication Card 614]

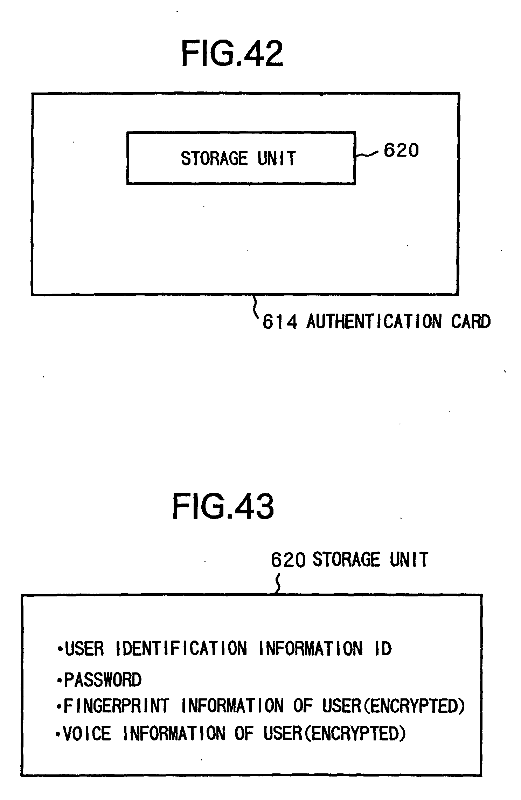

FIG. 42 is a view for explaining the authentication card 614 shown in FIG. 41.

As shown in FIG. 42, the authentication card 614 has a storage unit 620, for example, a magnetic strip or IC (integrated circuit).

FIG. 43 is a view for explaining the information stored in the storage unit 620.

The storage unit 620, at the time of issuance of the authentication card 614, stores the user identification information ID allocated to the user 12a, the password PWD determined by the user 12a, the encrypted fingerprint information of the user 12a, and the encrypted voice information of the user 12a.

### [Authentication Apparatus 615a]

The authentication apparatus 615a is built in for example the ATM of a bank or a personal computer.

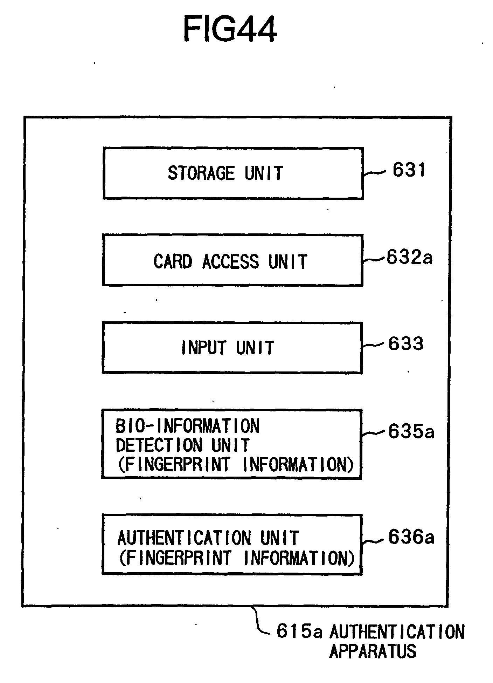

FIG. 44 is a functional block diagram illustrating the authentication apparatus 615a shown in FIG. 41.

As shown in FIG. 44, the authentication apparatus 615a has for example a storage unit 631, a card access unit 632a, an input unit 633, a bio-information detection unit 635a, and an authentication unit 636a.

Here, the card access unit 632a corresponds to the reading means of the present invention, the bio-information detection unit 635a corresponds to the detecting means of the present invention, and the authentication unit 636a corresponds to the authenticating means of the present invention.

The storage unit 631 is for example a hard disk drive or semiconductor memory.

The card access unit 632a inputs or outputs the information with the authentication card 614.

The input unit 633 is used for inputting the password PWD by the user 12a.

The bio-information detection unit 635a detects the fingerprint information of the user 12a.

The authentication unit 636a compares the fingerprint information of the user 12a input from the authentication card 614 via the card access unit 632a with the fingerprint information detected by the bio-information detection unit 635a and authenticates the legitimacy of the user 12a based on the result of the comparison.

### [Authentication Apparatus 615b]

The authentication apparatus 615b is built in for example the ATM of a bank or a personal computer.

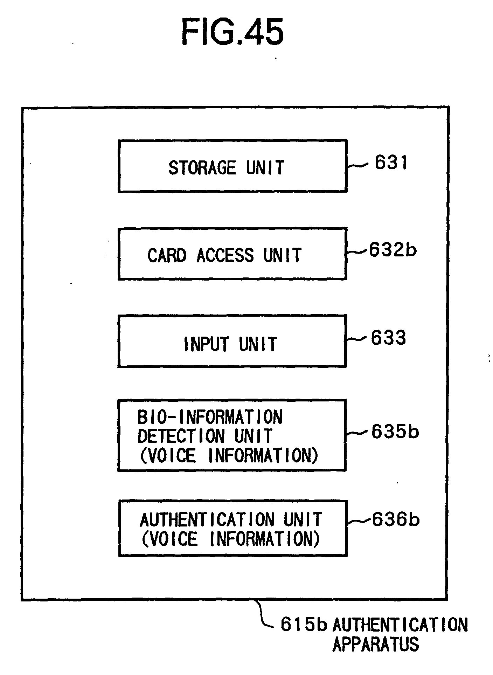

FIG. 45 is a functional block diagram illustrating the authentication apparatus 615b shown in FIG. 41.

As shown in FIG. 45, the authentication apparatus 615b has for example a storage unit 631, a card access unit 632b, the input unit 633, a bio-information detection unit 635b, and an authentication unit 636b.

Here, the storage unit 631 and the input unit 633 are the same as those shown in FIG. 44.

Here, the card access unit 632b corresponds to the reading means of the present invention, the bio-information detection unit 635b corresponds to the detecting means of the present invention, and the authentication unit 636b corresponds to the authenticating means of the present invention.

The card access unit 632b inputs and outputs the information with the authentication card 614.

The bio-information detection unit 635b detects the voice information of the user 12a.

The authentication unit 636b compares the voice information of the user 12a input from the authentication card 614 via the card access unit 632b with the voice information detected by the bio-information detection unit 635b, and authenticates the legitimacy of the user 12a based on the result of the comparison.

Below, an explanation will be made of an example of the operation of the authentication system 601.

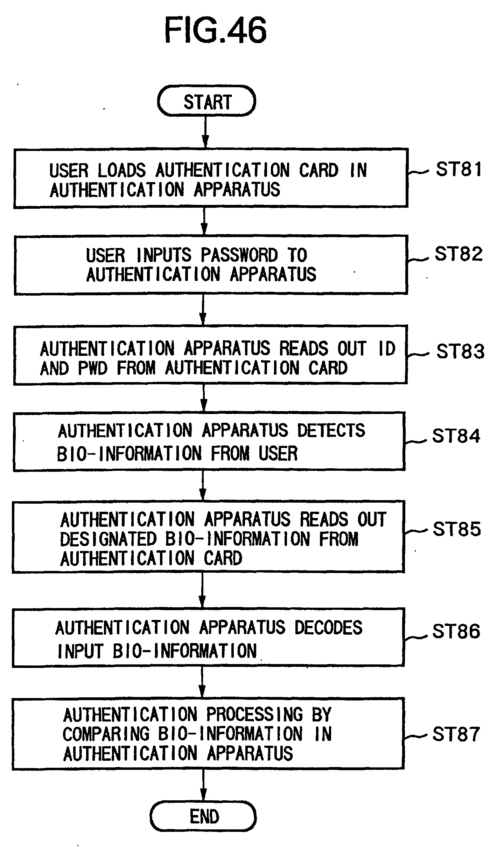

FIG. 46 is a flow chart for explaining an example of the operation of the authentication system 601 shown in FIG. 41.

Below, an explanation will be made of a case where the user 12a authenticates itself by using the authentication apparatus 615a.

### Step ST81:

The user 12a places the authentication card 614 at a position where it can be read out by the card access unit 632a of the authentication apparatus 615a.

### Step ST82:

The user 12a operates the input unit 633 of the authentication apparatus 615a to input the password PWD.

### Step ST83:

The card access unit 632a of the authentication apparatus 615a reads out the user identification information ID and the password PWD from the storage unit 620 of the authentication card 614 and stores it in the storage unit 631. Then, it compares the read out password PWD and the password PWD input at step ST82 and, when they coincide, performs the following processing.

### Step ST84:

The bio-information detection unit 635a of the authentication apparatus 615a detects the fingerprint information of the user 12a.

### Step ST85:

The card access unit 632a of the authentication apparatus 615a reads out the encrypted fingerprint information of the user 12a stored in the storage unit 620 of the authentication card 614 and stores it in the storage unit 631.

### Step ST86:

The authentication unit 636a of the authentication apparatus 615a decodes the fingerprint information read out at step ST85.

### Step ST87:

The authentication unit 636a compares the fingerprint information decoded at step ST86 and the fingerprint information detected by the bio-information detection unit 635a at step ST84 and authenticates the legitimacy of the user 12a based on the result of the comparison.

Note that, the example of the operation of the case where the user 12a authenticates itself by using the authentication apparatus 615b is the same as the above example of the operation except for the points that the voice information of the user 12a is detected at step ST84, the voice information of the user 12a is read out at step ST85, and the voice information of the user 12a is compared and the authentication is carried out at step ST86.

As explained above, according to the authentication system 601, the user 12a can perform the authentication using the fingerprint information in the authentication apparatus 615a and perform the authentication using the voice information in the authentication apparatus 615b by using one authentication card 614.

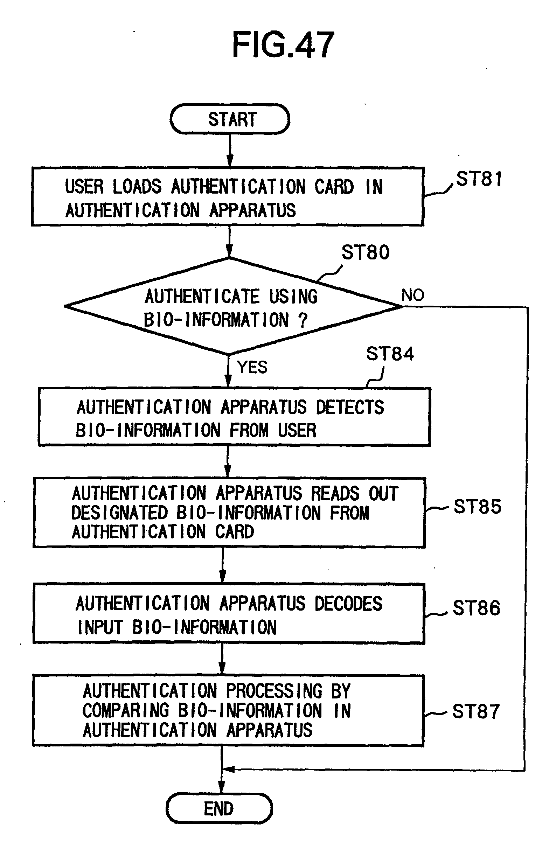

Note that, in the present embodiment, for example, as shown in FIG. 47, after the processing of step ST81 explained in FIG. 46 is terminated, it is also possible if processing for deciding whether or not the bio-information is to be authenticated is carried out by the authentication apparatus (ST80), the processing of steps ST84 to ST87 shown in FIG. 46 is carried out when it is decided that the bio-information is to be authenticated, while the processing is terminated when it is decided that the bio-information is not to be authenticated.

### 10th Embodiment

The present embodiment is an embodiment corresponding to the 19th to 21st aspects of the invention.

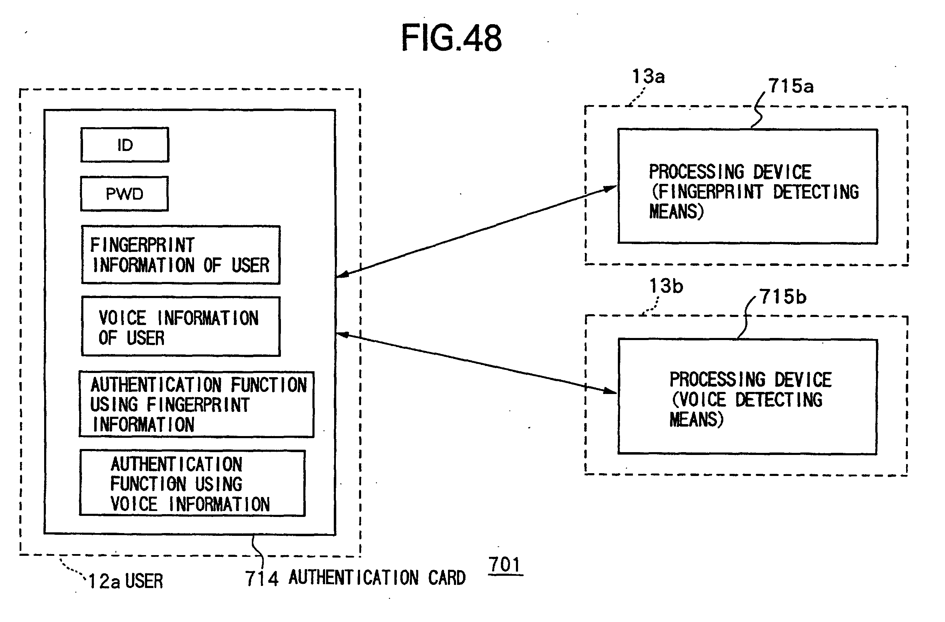

FIG. 48 is an overall view illustrating the configuration of an authentication system 701 of the present embodiment.

As shown in FIG. 48, the authentication system 701 authenticates the user 12a by using an authentication card 714 used by the user 12a, a processing device 715a used by the business 13a, and a processing device 715b used by the business 13b.

Here, the authentication card 714 corresponds to the authentication module of the present invention, and the processing devices 715a and 715b correspond to the processing device of the present invention.

Below, an explanation will be made of the authentication card 714 and the processing devices 715a and 715b.

### [Authentication Card 714]

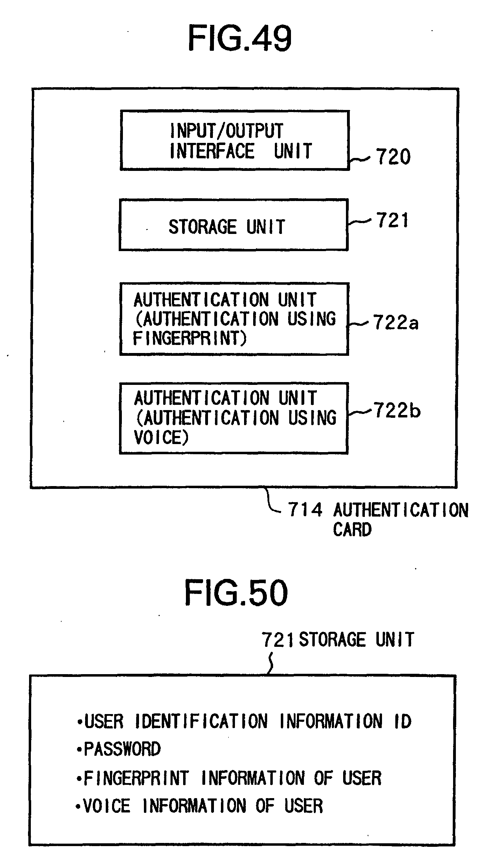

FIG. 49 is a view for explaining the authentication card 714 shown in FIG. 48.

As shown in FIG. 49, the authentication card 714 has an input/output interface unit 720, a storage unit 721, and authentication units 722a and 722b.

Here, the input/output interface unit 720 corresponds to the inputting means of the present invention, the storage unit 721 corresponds to the storing means of the present invention, and the authentication units 722a and 722b correspond to the authenticating means of the present invention.

The input/output interface unit 720 inputs and outputs the information with the processing devices 715a and 715b.

The storage unit 721 is for example a magnetic strip or IC (integrated circuit).

FIG. 50 is a view for explaining the information stored in the storage unit 721.

The storage unit 721, at the time of issuance of the authentication card 714, stores the user identification information ID allocated to the user 12a, the password PWD determined by the user 12a, the encrypted fingerprint information of the user 12a, and the encrypted voice information of the user 12a.

The authentication unit 722a compares the fingerprint information detected from the user 12a input from the processing device 715a with the fingerprint information of the user 12a read out from the storage unit 721 and outputs the result of the comparison to the processing device 715a.

The authentication unit 722b compares the voice information detected from the user 12a input from the processing device 715b with the voice information of the user 12a read out from the storage unit 721 and outputs the result of the comparison to the processing device 715b.

### [Processing Device 715a]

The processing device 715a is built in for example the ATM of a bank or a personal computer.

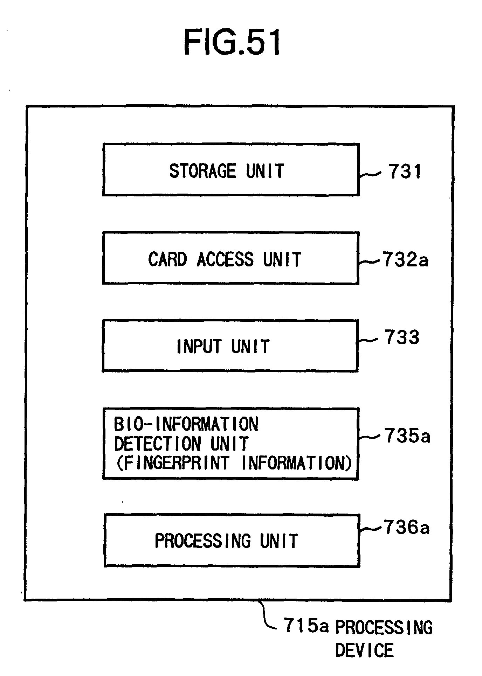

FIG. 51 is a functional block diagram illustrating the processing device 715a shown in FIG. 48.

As shown in FIG. 51, the processing device 715a has for example the storage unit 731, a card access unit 732a, the input unit 733, a bio-information detection unit 735a, and a processing unit 736a.

Here, the card access unit 732a corresponds to the outputting means of the present invention, and the bio-information detection unit 735a corresponds to the detecting means of the present invention.

The storage unit 731 is for example a hard disk drive or semiconductor memory.

The card access unit 732a inputs and outputs the information with the authentication card 714.

The input unit 733 is used for inputting a password PWD by the user 12a.

The bio-information detection unit 735a detects the fingerprint information of the user 12a.

The processing unit 736a performs, for example, account debiting processing or transaction processing based on the result of authentication input from the authentication card 714.

### [Processing Device 715b]

The processing device 715b is built in for example the ATM of a bank or a personal computer.

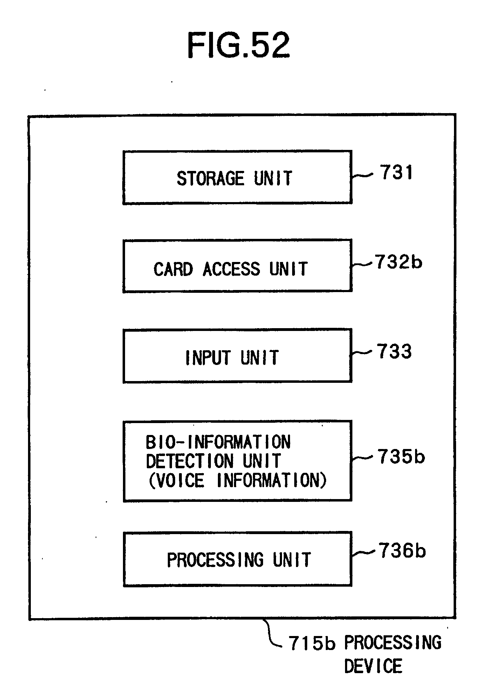

FIG. 52 is a functional block diagram illustrating the processing device 715b shown in FIG. 48.

As shown in FIG. 52, the processing device 715b has for example the storage unit 731, a card access unit 732b, the input unit 733, a bio-information detection unit 735b, and a processing unit 736b.

The card access unit 732b inputs and outputs the information with the authentication card 714.

The bio-information detection unit 735b detects the voice information of the user 12a.

The processing unit 736b performs for example account debiting processing or transaction processing based on the result of authentication input from the authentication card 714.

Here, the storage unit 731 and the input unit 733 are the same as those shown in FIG. 51.

Below, an explanation will be made of an example of the operation of the authentication system 701.

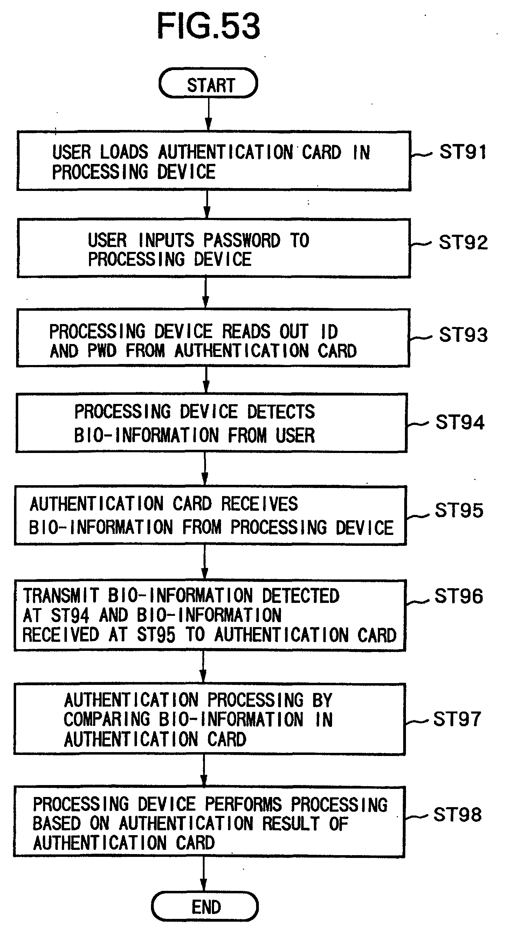

FIG. 53 is a flow chart for explaining an example of the operation of the authentication system 701 shown in FIG. 48.

Below, an explanation will be made of a case where the user authenticates itself by using the processing device 715a.

### Step ST91:

The user 12a places the authentication card 714 at a position where it can be read out by the card access unit 732a of the processing device 715a.

### Step ST92:

The user 12a operates the input unit 733 of the processing device 715a to input the password PWD.

### Step ST93:

The card access unit 732a of the processing device 715a reads out the user identification information ID and the password PWD from the storage unit 721 of the authentication card 714 and stores them in the storage unit 731. Then, it compares the read out password PWD and the password PWD input at step ST92 and, when they coincide, performs the following processing.

### Step ST94:

The bio-information detection unit 735a of the processing device 715a detects the fingerprint information of the user 12a.

### Step ST95:

The fingerprint information of the user 12a detected at step ST94 and the decoding key information are output from the input/output interface unit 720 of the processing device 715a to the authentication card 714.

### Step ST96:

The authentication unit 722a of the authentication card 714 decodes the fingerprint information of the user 12a read out from the storage unit 721 by using the decoding key information input at step ST95.

### Step ST97:

The authentication unit 722a compares the fingerprint information input at step ST95 and the fingerprint information decoded at step ST96 and authenticates the legitimacy of the user 12a based on the result of the comparison. Then, it outputs the result of the authentication from the input/output interface unit 720 to the processing device 715a.

### Step ST98:

The processing unit 736a of the processing device 715a performs for example account debiting processing or transaction processing when the user 12a is the legitimate user based on the result of authentication input at step ST97.

Note that the example of the operation of the case when the user 12a authenticates itself by using the processing device 715b is the same as the above example of the operation except for the points that the voice information of the user 12a is detected at step ST94, the voice information of the user 12a is transmitted at step ST95, and the authentication is carried out by comparing the voice information of the user 12a at step ST97.

As explained above, according to the authentication system 701, the user 12a can perform the authentication using the fingerprint information in the processing device 715a and perform the authentication using the voice information in the processing device 715b by using one authentication card 714.

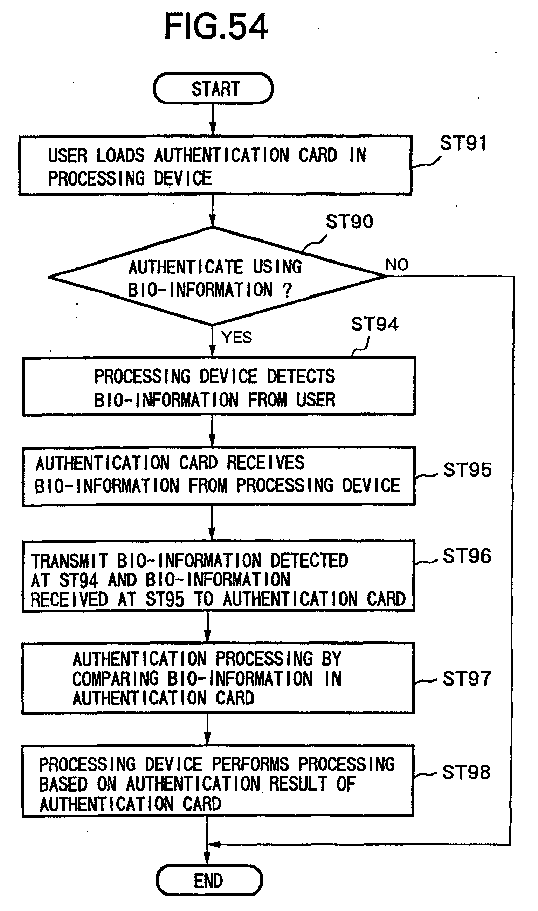

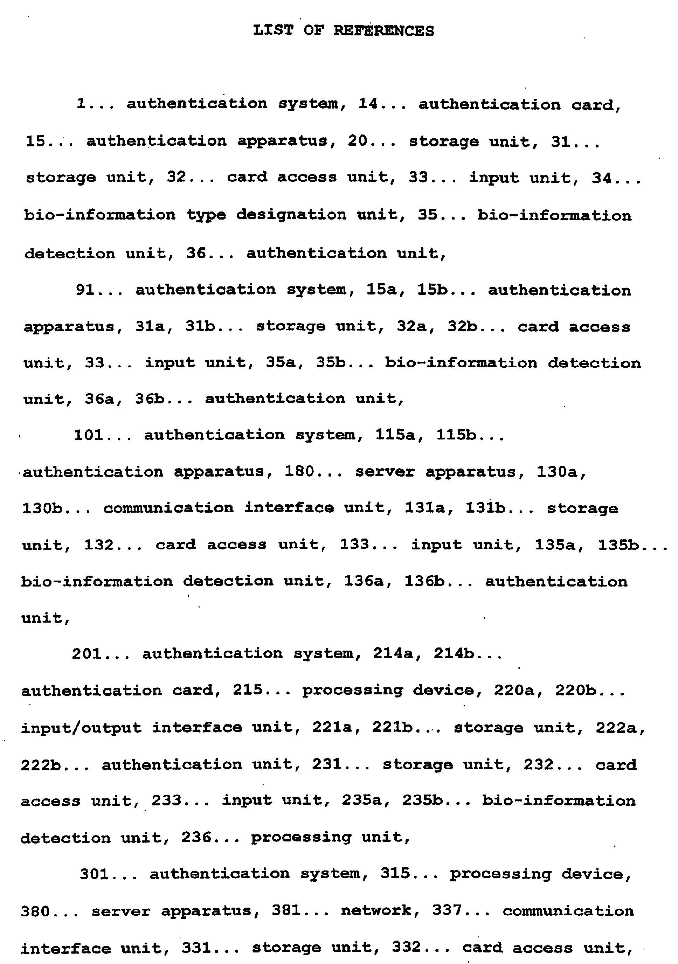

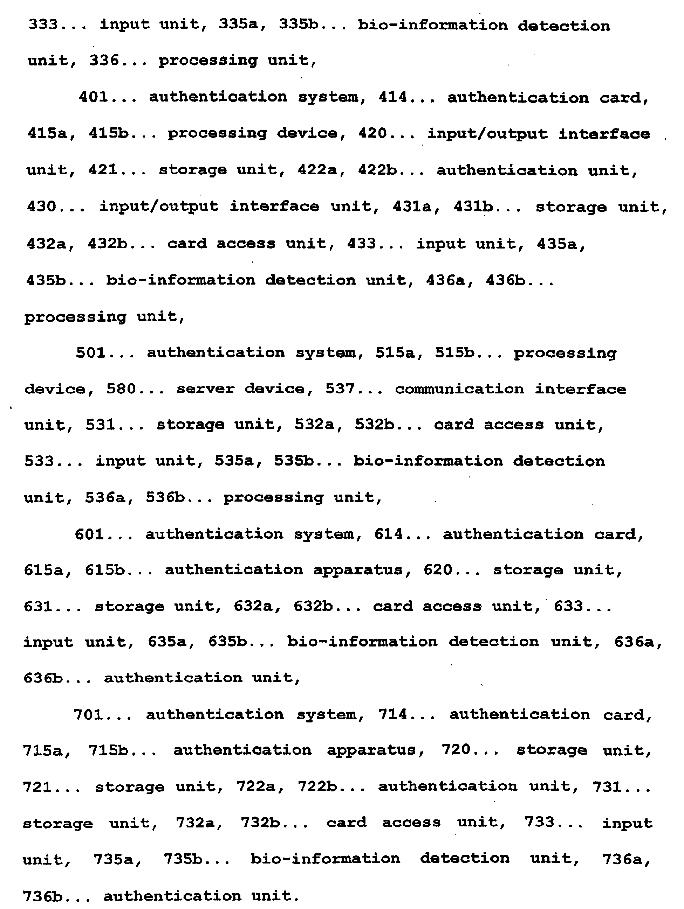

Note that, in the present embodiment, for example, as shown in FIG. 54, after the processing of step ST91 explained in FIG. 53 is terminated, it is also possible if processing for deciding whether or not the bio-information is to be authenticated is carried out by the processing device (ST90), the processing of steps ST94 to ST98 shown in FIG. 53 is carried out when it is decided that the bio-information is to be authenticated, while the processing is terminated when it is decided that the bio-information is not to be authenticated.

The present invention is not limited to the above embodiments.

For example, in the embodiments, as the identification information stored in the module of the invention, the identification information of the user (user identification information) was exemplified, but it is also possible to use the module identification information for identifying the module.

### INDUSTRIAL APPLICABILITY

As explained above, according to the present invention, an authentication method, authentication system, authentication apparatus, and authentication module capable of authenticating a user using bio-information with respect to a variety of users having different physical characteristics can be provided.

Also, according to the present invention, an authentication method, authentication system, authentication apparatus, and authentication module making it possible to authenticate a user by using a plurality of apparatuses provided with detecting means capable of detecting different bio-information can be provided.

## Claims

1. An authentication method for authenticating a user by using an authentication module which is portable, wherein
a controlling means reads out a designated type of bio-information from among a plurality of types of bio-information of said user stored in a storing means,
a detecting means detects said designated type of bio-information from said user, and
an authenticating means compares the bio-information read out from said storing means with the bio-information read out by said detecting means and authenticates the legitimacy of said user based on a result of the comparison.

2. An authentication method as set forth in claim 1, wherein
said bio-information is at least one information of fingerprint information, voice information, handwriting information, face contour information, iris information, retinal information, palm information, earlobe information, and vein pattern information.

3. An authentication apparatus for authenticating a user by using an authentication module which is portable and stores identification information for identifying said user or said authentication module, comprising
a storing means for storing a plurality of types of bio-information of said user linked with said identification information,
a reading means for reading said identification information from said authentication module,
a detecting means for detecting said designated type of bio-information from said user, and
an authenticating means for reading from the storing means said designated type of bio-information among the bio-information corresponding to said identification information read out by said reading means, comparing the read out bio-information with the bio-information detected by said detecting means, and authenticating the legitimacy of said user based on the result of the comparison.

4. An authentication apparatus as set forth in claim 3, further comprising a designating means for designating what type of bio-information to use for authentication of said user among said plurality of types of bio-information.

5. An authentication method for authenticating a user by using an authentication module which is portable and stores identification information for identifying said user or said authentication module, and an authentication apparatus, wherein
said authentication apparatus reads out said identification information from said authentication module,
said authentication apparatus reads out said designated type of bio-information among the bio-information corresponding to said read out identification information from the storing means provided in the authentication apparatus,
said authentication apparatus detects said designated type of bio-information from said user, and
said authentication apparatus compares said read out bio-information with said detected bio-information and authenticates the legitimacy of said user based on the result of the comparison.

6. An authentication system comprising at least two authentication apparatuses including a first authentication apparatus and a second authentication apparatus for authenticating a user using an authentication module which is portable and stores identification information for identifying said user or the authentication module, wherein
said first authentication apparatus comprises
a first storing means for storing a first type of bio-information of said user linked with said identification information,
a first reading means for reading said identification information from said authentication module,
a first detecting means for detecting said first type of bio-information from said user, and
a first authenticating means for comparing the bio-information corresponding to said identification information read out by said first reading means with the bio-information detected by said first detecting means and authenticating the legitimacy of said user based on the result of the comparison, and
said second authentication apparatus comprises
a second storing means for storing a second type of bio-information of said user linked with said identification information,
a second reading means for reading said identification information from said authentication module,
a second detecting means for detecting said second type of bio-information from said user, and
a second authenticating means for comparing the bio-information corresponding to said identification information read out by said second reading means with the bio-information detected by said second detecting means and authenticating the legitimacy of said user based on the result of the comparison.

7. An authentication method for authenticating a user by using an authentication module which is portable and stores identification information for identifying said user or the authentication module, and at least two authentication apparatuses comprising a first authentication apparatus and a second authentication apparatus for authenticating said user, wherein
said first authentication apparatus reads out said identification information from said authentication module,
said first authentication apparatus detects said first type of bio-information from said user,
said first authentication apparatus reads out the first type of bio-information corresponding to said read out identification information from the first storing means provided in the first authentication apparatus,
said first authentication apparatus compares said read out first type of bio-information with said detected first type of bio-information and authenticates the legitimacy of said user based on the result of the comparison,
said second authentication apparatus reads out said identification information from said authentication module,
said second authentication apparatus detects said second type of bio-information from said user,
said second authentication apparatus reads out the second type of bio-information corresponding to said read out identification information from the second storing means provided in the second authentication apparatus, and
said second authentication apparatus compares said read out second type of bio-information with said detected second type of bio-information and authenticates the legitimacy of said user based on the result of the comparison.

8. An authentication system comprising an authentication apparatus for authenticating a user by using an authentication module which is portable and stores identification information for identifying said user or the authentication module, and a server device for storing the bio-information of said user, wherein
said server device stores a plurality of types of bio-information of said user linked with said identification information, and
said authentication apparatus comprises
a reading means for reading said identification information from said authentication module,
a detecting means for detecting the type of bio-information used for authentication from said user, and
an authenticating means for requesting the bio-information used for said authentication among the bio-information corresponding to said identification information read out by said reading means to said server device, receiving the bio-information from said server device in response to the request, comparing the bio-information received from the server device with the bio-information detected by said detecting means, and authenticating the legitimacy of said user based on the result of the comparison.

9. An authentication method for authenticating a user by using an authentication apparatus for authenticating said user using an authentication module which is portable and stores the identification information for identifying said user or the authentication module, and a server device for storing the bio-information of said user, wherein
said server device stores a plurality of types of bio-information of said user linked with said identification information,
said authentication apparatus reads out said identification information from said authentication module,
said authentication apparatus detects the type of the bio-information used for authentication from said user,
said authentication apparatus requests the bio-information used for said authentication among the bio-information corresponding to said read out identification information to said server device,
said server device transmits the bio-information used for said authentication to said authentication apparatus in response to said request, and
said authentication apparatus compares the bio-information received from said server device with said detected bio-information and authenticates the legitimacy of said user based on the result of the comparison.

10. An authentication system comprising a first authentication module and a second authentication module which are portable and used by a user, and a processing device for processing based on the result of the authentication of said user using said first authentication module and said second authentication module, wherein
said first authentication module comprises
a first storing means for storing first identification information for identifying said user or the first authentication module and
a first authenticating means for comparing the first type of bio-information of said user detected by said processing device with said first type of bio-information corresponding to said first identification information stored in said first storing means, authenticating the legitimacy of said user based on the result of the comparison, and outputting the result of the authentication to said processing device,
said second authentication module comprises
a second storing means for storing second identification information for identifying said user or the second authentication module and
a second authenticating means for comparing the second type of bio-information of said user detected by said processing device with said second type of bio-information corresponding to said second identification information stored in said second storing means, authenticating the legitimacy of said second user based on the result of the comparison, and outputting the result of the authentication to said processing device,
said processing device comprises
a storing means for storing said first type of bio-information of said user linked with said first identification information and storing said second type of bio-information of said user linked with said second identification information,
a reading means for reading said first identification information from said first authentication module and said second identification information from said second authentication module,
a first detecting means for detecting said first type of bio-information from said user,
a second detecting means for detecting said second type of bio-information from said user,
an outputting means for outputting to said first authentication module said first type of bio-information of said user stored in said storing means and said bio-information detected at said first detecting means and outputting to said second authentication module said second type of bio-information of said user and said bio-information detected at said second detecting means, and
a processing means for processing based on results of the authentication input from said first authentication module and said second authentication module.

11. An authentication method using a first authentication module and a second authentication module which are portable and used by a user, and a processing device for performing the processing based on the result of the authentication of said user using said first authentication module and said second authentication module, wherein,
when said processing device authenticates said user by using said first authentication,module,
said processing device reads out first identification information for identifying the first authentication module or the user of the first authentication module from said first authentication module,
said processing device reads out the first type of bio-information corresponding to said read out first identification information from the storing means provided in the processing device,
said processing device detects said first type of bio-information from said user,
said processing device outputs said read out first type of bio-information and said detected first type of bio-information to said first authentication module,
said first authentication module compares said bio-information input from said processing device, authenticates the legitimacy of said user based on the result of the comparison, and outputs the result of the authentication to said processing device, and
said processing device performs the processing based on the result of said authentication input from said first authentication module, while
when said processing device authenticates said user by using said second authentication module,
said processing device reads out from said second authentication module second identification information for identifying the second authentication module or the user of the second authentication module,
said processing device reads out the second type of bio-information corresponding to said read out second identification information from the storing means provided in the processing device,
said processing device detects said second type of bio-information from said user,
said processing device outputs said read out second type of bio-information and said detected second type of bio-information to said second authentication module,
said second authentication module compares said bio-information input from said processing device, authenticates the legitimacy of said user based on the result of the comparison, and outputs the result of the authentication to said processing device, and
said processing device performs the processing based on the result of said authentication input from said second authentication module.

12. An authentication system comprising a first authentication module and a second authentication module which are portable and used by a user, a server device for storing the bio-information of said user and having a processing device for performing the processing based on the result of the authentication of said user using said first authentication module and said second authentication module, wherein
said first authentication module comprises
a first storing means for storing first identification information for identifying said user or the first authentication module and
a first authenticating means for comparing the first type of bio-information of said user detected by said processing device with said first type of bio-information input from said processing device, authenticating the legitimacy of said user based on the result of the comparison, and outputting the result of the authentication to said processing device,
said second authentication module comprises
a second storing means for storing second identification information for identifying said user or the second authentication module and
a second authenticating means for comparing the second type of bio-information of said user detected by said processing device with said second type of bio-information input from said processing device, authenticating the legitimacy of said user based on the result of the comparison, and outputting the result of the authentication to said processing device,
said server device stores said first type of bio-information of said user linked with said first identification information and stores said second type of bio-information of said user linked with said second identification information, and
said processing device comprises
a first reading means for reading said first identification information from said first authentication module and said second identification information from said second authentication module,
a first detecting means for detecting said first type of bio-information from said user,
a second detecting means for detecting said second type of bio-information from said user,
an outputting means for outputting to said first authentication module said first type of bio-information of said user received from said server device and said bio-information detected by said first detecting means when said first authentication module is to be used, while outputting to said second authentication module said second type of bio-information of said user received from said server device and said bio-information detected by said second detecting means when said second authentication module is to be used, and
a processing means for performing the processing based on the result of said authentication input from said first authentication module and said second authentication module.

13. An authentication method using a first authentication module and a second authentication module which are portable and used by a user, a processing device for performing the processing based on the result of the authentication of said user using said first authentication module and said second authentication module and using a server device, wherein,
when said processing device authenticates said user by using said first authentication module,
said processing device reads out the first identification information for identifying the first authentication module or the user of the first authentication module from said first authentication module,
said processing device requests said first type of bio-information corresponding to said first identification information to said server device,
said server device transmits said first type of bio-information corresponding to said first identification information to said processing device in response to said request,
said processing device detects said first type of bio-information from said user,
said processing device outputs the first type of bio-information received from said server device and said detected first type of bio-information to said first authentication module,
said first authentication module compares said bio-information input from said processing device, authenticates the legitimacy of said user based on the result of the comparison, and outputs the result of the authentication to said processing device, and
said processing device performs the processing based on the result of said authentication input from said first authentication module, while
when said first processing device authenticates said user by using said second authentication module,
said processing device requests said second type of bio-information corresponding to said second identification information to said server device,
said server device transmits said first type of bio-information corresponding to said second identification information to said processing device in response to said request,
said processing device detects said second type of bio-information from said user,
said processing device outputs said second type of bio-information received from said server device and said detected second type of bio-information to said second authentication module,
said second authentication module compares said bio-information input from said processing device, authenticates the legitimacy of said user based on the result of the comparison, and outputs the result of the authentication to said processing device, and
said processing device performs the processing based on the result of said authentication input from said second authentication module.

14. An authentication system comprising an authentication module which is portable and used by a user and a plurality of processing devices including a first processing device and a second processing device for performing processing based on the result of authentication of said user using said authentication module, wherein
said authentication module comprises
a storing means for storing identification information for identifying said user or the authentication module and
an authenticating means for comparing, when the authentication is carried out by using said first processing device, first type of bio-information of said user detected by said first processing device with said first type of bio-information corresponding to said identification information stored in said first processing device, authenticating the legitimacy of said user based on the result of the comparison, and outputting the result of the authentication to said first processing device, while comparing, when the authentication is carried out by using said second processing device, second type of bio-information of said user detected by said second processing device with said second type of bio-information corresponding to said identification information stored in said second processing device, authenticating the legitimacy of said user based on the result of the comparison, and outputting the result of the authentication to said second processing device,
said first processing device comprises
a first storing means for storing said first type of bio-information of said user linked with said identification information,
a first reading means for reading said identification information from said authentication module,
a first detecting means for detecting said first type of bio-information from said user,
a first outputting means for outputting bio-information which is stored in said first storing means and corresponds to said identification information, and outputting said bio-information detected at said first detecting means to said authentication module, and
a first processing means for performing the processing based on the result of said authentication input from said authentication module, and
said second processing device comprises
a second storing means for storing said second type of bio-information of said user linked with said identification information,
a second reading means for reading said identification information from said authentication module,
a second detecting means for detecting said second type of bio-information from said user,
a second outputting means for outputting bio-information which is stored in said second storing means and corresponds to said identification information, and outputting said bio-information detected at said second detecting means to said authentication module, and
a second processing means for performing the processing based on the result of said authentication input from said authentication module.

15. An authentication method using an authentication module which is portable and used by a user and a plurality of processing devices comprising a first processing device and a second processing device for performing processing based on the result of authentication of said user using said authentication module, wherein,
when carrying out the authentication by using said authentication module and said first processing apparatus,
said first processing device reads out. identification information for identifying said user or the authentication module from said authentication module,
said first processing device reads out a first type of bio-information corresponding to said read out identification information from a first storing means provided in the first processing device,
said first processing device detects said first type of bio-information from said user,
said first processing device outputs said read out first type of bio-information and said detected first type of bio-information to said authentication module,
said authentication module compares said bio-information input from said first processing device, authenticates the legitimacy of said user based on the result of the comparison, and outputs the result of the authentication to said first processing device, and
said first processing device performs the processing based on the result of said authentication input from said authentication module, while
when carrying out the authentication by using said authentication module and said second processing device,
said second processing device reads out identification information for identifying said user or the authentication module from said authentication module,
said second processing device reads out a second type of bio-information corresponding to said read out identification information from a second storing means provided in the second processing device,
said second processing device detects said second type of bio-information from said user,
said second processing device outputs said read out second type of bio-information and said detected second type of bio-information to said authentication module,
said authentication module compares said bio-information input from said second processing device, authenticates the legitimacy of said user based on the result of the comparison, and outputs the result of the authentication to said second processing device, and
said second processing device performs the processing based on the result of said authentication input from said authentication module.

16. An authentication system comprising an authentication module which is portable and used by a user, a server device for storing bio-information of said user, and a plurality of processing devices including a first processing device and a second processing device for performing processing based on the result of authentication of said user using said authentication module, wherein
said authentication module comprises
a storing means for storing identification information for identifying said user or the authentication module and
an authenticating means for comparing, when the authentication is carried out by using said first processing device, a first type of bio-information of said user detected by said first processing device with bio-information input from said first processing device, that is, said first type of bio-information corresponding to said identification information, authenticating the legitimacy of said user based on the result of the comparison, outputting the result of the authentication to said first processing device, while comparing, when the authentication is carried out by using said second processing device, a second type of bio-information of said user detected by said second processing device with bio-information input from said second processing device, that is, said second type of bio-information corresponding to said identification information, authenticating the legitimacy of said user based on the result of the comparison, and outputting the result of the authentication to said second processing device,
said server.device stores said first type of bio-information of said user linked with said first identification information and stores said second type of bio-information of said user linked with said second identification information,
said first processing device comprises
a first reading means for reading said identification information from said authentication module,
a first detecting means for detecting said first type of bio-information from said user,
a first outputting means for receiving said first type of bio-information of said user from said server device and outputting the bio-information received from the server device and said bio-information detected at said first detecting means to said authentication module, and
a first processing means for performing the processing based on the result of said authentication input from said authentication module, and
said second processing device comprises
a second reading means for reading said identification information from said authentication module,
a second detecting means for detecting said second type of bio-information from said user,
a second outputting means for receiving said second type of bio-information of said user from said server device and outputting the bio-information received from the server device and said bio-information detected at said second detecting means to said authentication module, and
a second processing means for performing the processing based on the result of said authentication input from said authentication module.

17. An authentication method for authenticating a user by using an authentication module which is portable and used by a user, a plurality of processing devices comprising a first processing device and second processing device for performing processing based on the result of the authentication of said user using said authentication module and a server device for storing the bio-information of said user, wherein,
when carrying out the authentication by using said authentication module and said first processing device,
said first processing device reads out the identification information for identifying said user or the authentication module from said authentication module,
said first processing device requests the first type of bio-information corresponding to said read out identification information to said server device,
said server device transmits a first type of bio-information corresponding to said identification information to said first processing device,
said first processing device detects said first type of bio-information from said user,
said first processing device outputs said first type of bio-information received from said server device and said detected first type of bio-information to said authentication module,
said authentication module compares said bio-information input from said first processing device, authenticates the legitimacy of said user based on the result of the comparison, and outputs the result of the authentication to said first processing device, and
said first processing device performs the processing based on the result of said authentication input from said authentication module, while,
when carrying out the authentication by using said authentication module and said second processing device,
said second processing device reads out the identification information for identifying said user or the authentication module from said authentication module,
said second processing device requests a second type of bio-information corresponding to said read out identification information to said server device,
said server device transmits the second type of bio-information corresponding to said identification information to said second processing device,
said second processing device detects said second type of bio-information from said user,
said second processing device outputs said second type of bio-information received from said server device and said detected second type of bio-information to said authentication module,
said authentication module compares said bio-information input from said second processing device, authenticates the legitimacy of said user based on the result of the comparison, and outputs the result of the authentication to said second processing device, and
said second processing device performs the processing based on the result of said authentication input from said authentication module.

18. An authentication apparatus for authenticating a user by using an authentication module which is portable and stores a plurality of bio-information of said user therein, comprising
a detecting means for detecting bio-information corresponding to at least one type of said plurality of types from said user,
a reading means for reading the bio-information corresponding to the type of said bio-information detected by said detecting means from said authentication module, and
an authenticating means for comparing the bio-information detected by said detecting means and the bio-information read out by said reading means and authenticating the legitimacy of said user based on the result of the comparison.

19. An authentication apparatus as set forth in claim 18, further having a decoding means for decoding said read out bio-information by using predetermined decoding key information when encrypted bio-information is stored in said authentication module.

20. An authentication system comprising an authentication module which is portable and having an authentication apparatus for authenticating said user by using said authentication module, wherein
said authentication module stores a plurality of types of bio-information, and
said authentication apparatus comprises
a detecting means for detecting the bio-information corresponding to at least one type of said plurality of types from said user,
a reading means for reading the bio-information corresponding to the type of said bio-information detected by said detecting means from said authentication module, and
an authenticating means for comparing the bio-information detected by said detecting means with the bio-information read out by said reading means and authenticating the legitimacy of said user based on the result of the comparison.

21. An authentication method for authenticating a user by using an authentication module which is portable and stores a plurality of types of bio-information of said user therein, comprising the steps of:
detecting the bio-information corresponding to at least one type of said plurality of types from said user;
reading the bio-information corresponding to said detected type of bio-information from said authentication module;
comparing said detected bio-information with said read out bio-information; and
authenticating the legitimacy of said user based on the result of the comparison.

22. An authentication system comprising an authentication module which is portable and a processing device, wherein
said authentication module comprises
a storing means for storing a plurality of types of bio-information,
an inputting means for inputting the bio-information of said user from said processing device, and
an authenticating means for reading the bio-information of the same type as said bio-information input by said inputting means from said storing mean, comparing the read out bio-information with said bio-information input from said inputting means, and authenticating the legitimacy of said user based on the result of the comparison, and
said processing device comprises
a detecting means for detecting the bio-information from said user and
an outputting means for outputting said detected bio-information to said authentication module.

23. An authentication system as set forth in claim 22, wherein said authentication module further has a decoding means for decoding said read out bio-information by using the predetermined decoding key information when encrypted bio-information is stored in said storing means.

24. An authentication module which is portable and authenticates a user by inputting and outputting bio-information with the processing device, comprising
a storing means for storing a plurality of types of bio-information,
an inputting means for inputting the bio-information of said user from said processing device, and
an authenticating means for reading the same type of bio-information as said bio-information input by said inputting means from said storing means, comparing the read out bio-information with said bio-information input from said inputting means, and authenticating the legitimacy of said user based on the result of the comparison.

25. An authentication module as set forth in claim 24, further comprising an outputting means for outputting the result of said authentication to said processing device.

26. An authentication method for authenticating a user by using an authentication module which is portable and a processing device, wherein
said processing device detects the bio-information of said user,
said processing device outputs said detected bio-information to said authentication module,
said authentication module reads out the same type of bio-information as said bio-information input from said processing device from the storing means provided in the authentication module, and
said authentication module compares said read out bio-information with said bio-information input from said processing device and authenticates the legitimacy of said user based on the result of the comparison.
